# EUROPÄISCHE PATENTANMELDUNG

(11) **EP 0 743 036 A1**
(43) Veröffentlichungstag der Anmeldung: **20.11.1996**
(21) Anmeldenummer: 96107829.2
(22) Anmeldetag: 16.05.1996
(51) Int. Cl.: A47J 27/08, A47J 36/16

(54) **Topf, insbesondere Dampfdruckkochtopf, sowie hierfür passende Deckel, Dämpfeinsatz, Simmereinsatz und Schneideinsatz**

(30) Priorität: 18.05.1995 DE 19518305
(71) Anmelder: Niese, Karl, D-67745 Grumbach (DE)
(72) Erfinder: Niese, Karl, D-67745 Grumbach (DE)
(74) Vertreter: Fuchs, Luderschmidt & Partner

(57) **Zusammenfassung**

Es wird Topf (2) beschrieben, der mit entsprechenden Zusatzeinrichtungen sowohl als Dampfdruckkochtopf als auch als Dämpftopf, Simmertopf oder Schneidvorrichtung eingesetzt werden kann. Der Topf (2) weist segmentförmige Vorsprünge (Topfsegmente 4) auf, die in das Topfinnere weisend ausgebildet sind. Die Topfsegmente sind als in die Umfangswand (100) von außen nach innen geprägte Sicken (104) ausgebildet. Der Dampfdruckdeckel (3) weist an seiner zylindrischen Umfangswand segmentförmige Vorsprünge (12) auf, die als Sicken (112) ausgebildet sind und mit den Topfsicken (104) zusammenwirken.

## Beschreibung

Die Erfindung betrifft einen Topf, insbesondere Dampfdruckkochtopf, mit einem Boden und einer Umfangswand, an der Griffe sowie sich unterhalb des oberen Bandes der Umfangswand in Umfangsrichtung erstreckende, segmentförmige Vorsprünge als Bestandteil einer Schließeinrichtung angeordnet sind. Die Erfindung bezieht sich auch auf für diesen Topf passende Deckel gemäß den Oberbegriffen der Patentansprüche 8 bzw. 21, auf einen Dämpfeinsatz gemäß dem Oberbegriff des Patentanspruchs 19, auf einen Simmereinsatz gemaß dem Oberbegriff des Patentanspruchs 24 sowie auf einen Schneideinsatz gemäß dem Oberbegriff des Patentanspruchs 32.

Die bekannten Dampfdruckkochtöpfe weisen in der Regel nach außen vorstehende Halte- und Schließelemente auf, so daß ein voluminöser Deckel erforderlich ist, um die Halte- und Schließelemente zu übergreifen. Ferner sind diese Töpfe und die dazugehörigen Deckel mit Stielgriffen ausgestattet, die zur Gewährleistung eines richtigen Verschlusses zur Deckung gebracht werden müssen. Die für einen einwandfreien Verschluß des Dampfdruckkochtopfs notwendigen Einrichtungen sind bei den bekannten Dampfdruckkochtöpfen in die Stiele oder die Deckelgriffe integriert. Die Konstruktion dieser Dampfdruckkochtöpfe läßt nur geringe Gestaltungsmöglichkeiten zu mit der Folge, daß Dampfdruckkochtöpfe alle zum Verwechseln ähnlich aussehen. Das Design von normalen Kochtöpfen läßt sich deshalb nicht auf Dampfdruckkochtöpfe übertragen, so daß Dampfdruckkochtöpfe auch nicht in Kochtopfserien integriert werden können.

Außer den beschränkten gestalterischen Möglichkeiten weisen die bekannten Dampfdruckkochtöpfe auch hinsichtlich der Handhabung erhebliche Nachteile auf.

Zum Schließen muß der Deckel so auf den Topf aufgesetzt werden, daß ein bestimmtes Segment des Bajonettverschlusses des Deckels in eine bestimmte Segmentlücke des Bajonettverschlusses des Topfes zu liegen kommt. Weil der Deckel den Schüttrand des Topfes wie eine Kappe abdeckt, ist die gesuchte Position in der Regel schlecht zu finden. Des weiteren ist eine Zentrierung des Deckels nicht vorhanden, was das Aufsetzen des Deckels zusätzlich erschwert.

Damit die Deckelsegmente beim Drehen des Deckels die Topfsegmente untergreifen, muß der Deckel möglichst mittig gegen die Federkraft der gummielastischen Dichtung nach unten gedrückt werden, wodurch sich die Reibkraft zwischen Topf, Dichtung und Deckel erhöht. Während des Herunterdrückens und Drehens des Deckels muß der Topf festgehalten werden.

Die aus dem Schüttrand des Topfes ausgeschnittenen Segmente des Bajonettverschlusses machen außerdem ein zielgenaues Ausgießen nahezu unmöglich.

Bei geschlossenem Dampfdruckkochtopf befinden sich die Segmentlücken des Bajonettverschlusses des Deckels in Deckung mit den Segmentlücken des Topfes. Um zu vermeiden, daß durch den Innendruck im Dampfdruckkochtopf die Dichtung durch die so entstandenen Öffnungen gedrückt wird, muß der Rücken der Dichtung massiv ausgeführt und breiter als diese Öffnungen sein. Dies hat wiederum zur Folge, daß die für eine angemessene Länge der unteren Dichtlippe benötigte Auflagefläche kaum ausreicht.

Die Segmente von Topf und Deckel müssen der Kraft, die durch den Innendruck im Dampfdruckkochtopf entsteht und den Deckel vom Topf abheben will, standhalten. Dabei werden sie wie ein Kragträger auf Biegung belastet. Ihre Festigkeit kann nur durch ihre Dicke der auftretenden Belastungangepaßt werden. Da Dampfdruckkochtöpfe aus Material nahezu gleicher Dicke hergestellt werden, hat dies zur Folge, daß der größte Teil des Dampfdruckkochtopfes, der geringen Belastungen ausgesetzt ist, überdimensioniert werden muß, was hohe Materialeinsatzkosten und ein hohes Gewicht zur Folge haben.

Aus der EP 0 247 406 B1 ist ein Dampfdruckkochtopf bekannt, der unterhalb des Behälterrandes an der Außenseite seiner Umfangswand Segmente in Form von Sperren und Anschlägen aufweist, die mit Deckelwandvorsprüngen am Deckel zusammenwirken. Der Deckel ragt allseitig über den Topf hinaus und wirkt daher wegen seines pilzförmigen Aussehens äußerst voluminös. Auch dieser Topf hat den Nachteil, daß beim Auflegen des Deckels die Segmente der Halte- und Schließeinrichtung ohne Zentrierung aufeinanderliegen. Da die Sperren- und Anschläge Bestandteile des Schüttrandes sind, ist ferner ein gezieltes Ausgießen nicht möglich. Dieser Dampfdruckkochtopf besitzt eine speziell ausgebildete Dichtung, die aufgrund ihrer Kippmechanik einen besonders breiten Schüttrand benötigt. Durch den breiten Schüttrand werden allerdings die Segmente durch den Innendruck des Topfes weitaus höher belastet, so daß auch entsprechend dickes Material eingesetzt werden muß. Dies bedingt wiederum ein höheres Gewicht, so daß dieser Topf als normaler Kochtopf ungeeignet ist.

Aus der DE 37 03 448 C2 ist ein Dampfdruckkochtopf bekannt, bei dem die Gefahr von Verformungen der Verriegelungselemente bei Druckbeaufschlagung dadurch beseitigt werden soll, daß er als Verriegelungselemente von innen nach außen ragende Wandsicken aufweist. Der Deckel übergreift nach außen den Topfrand und besitzt in der Deckelwandung nach innen weisende Sicken, die bei Druckbeaufschlagung auf Stauchung belastet werden. Um den Dichtring zu fixieren, ist jedoch in der Deckelwandung eine weitere Sicke oberhalb der Verriegelungssicke erforderlich, die bei Druckbeaufschlagung auf Dehnung belastet wird, was zu einer Streckung der Deckelwand und damit unter Umständen zu Undichtigkeiten im Bereich der Dichtung führen kann. Der Topf hat ferner den Nachteil, daß er durch den übergreifenden Deckel voluminös wirkt und wegen seines Aussehens daher in bestehende Kochtopfserien nicht integriert werden kann. Weiterhin haben die nach außen ragenden Topfsicken den Nachteil, daß sich beim Ausschütten in diesen Sicken Flüssigkeit sammelt, so daß der Topf nur dann vollständig entleert werden kann, wenn er um 180° gedreht wird.

Aus der AT 116021 ist ein Dampfdruckkochtopf bekannt, dessen oberer Rand nach innen umgebogen ist und einen Halsstreifen bildet, gegen dessen Innenseite sich der Deckel anliegensoll. Damit der Deckel in das Gefäß eingeführt werden kann, sind zwei Einschnitte vorgesehen, die einander diametral gegenüberliegen und in den Halsring eingearbeitet sind. Der Nachteil dieses Topfes liegt darin, daß kein Schüttrand für ein zielgenaues Ausgießen vorhanden ist. Dadurch, daß die Einschnitte den Halsring nicht vollständig durchschneiden, weil die verbleibende Breite des Halsringes als Dichtfläche für den Dichtring benötigt wird, wird beim Ausgießen immer Flüssigkeit im Topf zurückgehalten.

Aufgabe der vorliegenden Erfindung ist ein Topf, der bedienungsfreundlich ist, vielfältige gestalterische Möglichkeiten zuläßt, und als Grundelement für Zusatzeinrichtungen dienen kann und in bestehende Kochtopfserien integriert werden kann. Der Erfindung liegt auch die Aufgabe zugrunde, entsprechende Zusatzeinrichtungen wie Deckel, Dämpfeinsatz, Simmereinsatz und Schneideinsatz bereitzustellen.

Diese Aufgabe wird mit einem Topf gemäß Patentanspruch 1 gelöst. Vorteilhafte Ausgestaltungen sind Gegenstand der Unteransprüche.

Der erfindungsgemäße Topf zeichnet sich dadurch aus, daß die segmentförmigen Vorsprünge (Topfsegmente), die Bestandteil der Schließeinrichtung sind, und daher mit entsprechenden Elementen, beispielsweise eines Deckels zusammenwirken, unterhalb des oberen Bandes der Umfangswand in das Topfinnere weisend ausgebildet sind. Der Schüttrand des Topfes bleibt somit von der Ausgestaltung der Topfsegmente unbeeinflußt, wodurch das Abschütten von Flüssigkeit
erleichtert wird. Ferner wird einerseits die äußere Form des Topfes nicht beeinflußt, so daß der Topf sich von einem normalen Kochtopf nicht unterscheidet. Dies eröffnet die Möglichkeit, den Topf in bestehende Kochtopfserien zu integrieren. Andererseits können die Topfsegmente als Halte- und Anschlagelemente für beliebige Topfeinsätze dienen, so daß die Verwendungsmöglichkeiten des Topfes gegenüber herkömmlichen Töpfen, insbesondere gegenüber bekannten Dampfdruckkochtöpfen, erheblich erweitert werden kann. Welche Einsätze zusammen mit dem Topf verwendet werden können, wird anhand des Dämpfeinsatzes, des Simmereinsatzes und des Schneideinsatzes noch erläutert werden.

Die Verlegung der segmentförmigen Vorsprünge (Topfsegmente) in das Topfinnere bietet darüber hinaus den Vorteil, daß auf einen Stielgriff verzichtet werden kann. Es können daher beliebige Beschläge am Topf angebracht werden, was ebenfalls zu der gestalterischen Freiheit beiträgt.

Es sind mindestens zwei Topfsegmente vorgesehen, die über den Umfang gleichmäßig verteilt sind. Vorteilhafterweise wird man eine ungradzahlige Anzahl von Topfsegmenten versehen, so daß einer Lücke auf der anderen Seite des Topfes immer ein Topfsegment gegenüberliegt. Dadurch wird die Stabilität des Topfes, insbesondere bei der Verwendung als Dampfdruckkochtopf, erhöht.

Vorzugsweise sind die Topfsegmente als in die Umfangswand von außen nach innen geprägte Sicken (Topfsicken) ausgebildet. Die Ausbildung von Topfsicken bildet den Vorteil, daß die erforderliche Stabilität bei der Verwendung als Dampfdruckkochtopf gewährleistet wird, ohne daß im Bereich der Topfsicken ein stärkeres Material verwendet werden muß, wie dies bei den Halte- und Schließsegmenten der herkömmlichen Dampfdruckkochtöpfe der Fall ist. Durch die Ausbildung von Sicken kann daher das Gewicht gegenüber dem herkömmlicher Dampfdruckkochtöpfe erheblich verringert werden.

Die durch die Ausbildung der Topfsicken entstandenen, von außen sichtbaren Vertiefungen sind vorzugsweise mittels eines Bandes abgedeckt, wobei das Band vorteilhafterweise an der Außenseite der Umfangswand aufgeschweißt ist. Es wird dadurch eine Art 3-Punkt-Verbindung geschaffen, die die Stabilität der Topfsicken zusätzlich erhöht. Es wird sogar eine stabilere Anordnung geschaffen, als wenn die Wanddicke vergrößert werden würde.

Gemäß einer weiteren Ausführungsform ist in der Umfangswand des Topfes mindestens eine sich vertikal erstreckende nach außen weisende Ausprägung vorgesehen. Diese Ausprägung befindet sich vorteilhafterweise im Bereich eines der Griffe in einer Segmentlücke zwischen und oberhalb der Topfsegmente. Diese Ausprägung wirkt mit der Dichtung im Deckel zusammen und wird im Zusammenhang mit dem Dampfdruckdeckel und dem Simmereinsatz erläutert.

Der Dampfdruckdeckel ist dadurch gekennzeichnet, daß die segmentförmigen Vorsprünge (Deckelsegmente) nach außen weisend ausgebildet sind. Die Deckelsegmente können ebenso wie die Topfsegmente als in die Umfangswand geprägte Sicken (Deckelsicken) ausgebildet sein. Die Anzahl und Umfangsverteilung der Deckelsegmente entspricht der Anzahl und Umfangsverteilung der Topfsegmente, wobei die Deckelsegmente kürzer sind als die zwischen den Topfsegmenten befindlichen Segmentlücken.

Der Dampfdruckdeckel kann beliebig auf den Topf aufgesetzt werden, wobei meistens die Deckelsegmente auf den Topfsegmenten aufliegen. Hierdurch ist der Dampfdruckdeckel in dieser Lage bereits eindeutig zentriert. Durch Drehen des Dampfdruckdeckels wird eine Position erreicht, bei der die Deckelsegmente sich im Bereich der Segmentlücken der Topfsegmente befinden, so daß der Dampfdruckdeckel durch sein Eigengewicht nach unten fällt. Durch weiteres Drehen des Dampfdruckdeckels gleiten die Topfsegmente und die Deckelsegmente übereinander, so daß der Topf verschlossen werden kann.

Hierbei ist es vorteilhaft, wenn die Deckelsicken gekrümmte, nach oben zur Haube des Deckels weisende Endabschnitte aufweisen. Die Lange des zwischen den Endabschnitten befindlichen Mittelabschnitts der Deckelsicken entspricht vorteilhafterweise der Länge der Topfsicken.

Um ein dichtes Verschließen des Deckels zu gewährleisten, trägt die Umfangswand des Deckels an ihrer Außenseite zwischen Haube und Deckelsicken mindestens eine Feder, die sich beim Aufsetzen und Verschließen des Topfes zunehmend spannt. Als besondere Ausführungsform kann die Feder sich längs des Umfangs der Umfangswand wellenförmig erstrecken, wobei ein Wellental im Bereich einer Deckelsicke liegt. Um die Feder an der Umfangswand des Dampfdruckdeckels zu halten, besitzt die Feder vorzugsweise in der Deckelebene mäanderförmig gebogene Abschnitte, wobei die Feder mit mindestens einer mäanderförmigen Biegung pro Abschnitt in eine entsprechende Öffnung der Umfangswand eingreift.

Beim Übereinanderschieben von Topfsicken und Deckelsicken schieben sich die Topfsicken zunehmend in den Bereich der Wellentäler der Feder, so daß diese dadurch gespannt wird. Die maximale Spannung wird dann erreicht, wenn die Topfsicken auf den Mittelabschnitten der Deckelsicken aufliegen. Die Wellentäler der Feder drücken dann die Topfsicken fest gegen die Deckelsicken, so daß ein sicherer Verschluß gewährleistet wird.

Zur Abdichtung ist ein Dichtelement in Form eines Dichtungsringes vorgesehen, der zwischen Haube und Feder an der Deckelwand anliegt und an seiner Außenseite eine umlaufende Dichtkante besitzt. Während des Schließvorganges schneidet die Dichtkante des Dichtungsringes den Bereich der Ausprägung, so daß der Dampfdruckkochtopf undicht ist. Erst wenn die nach oben weisenden Enden der Deckelsicken die Topfsicken umgreifen, wird der Deckel von der Feder angehoben und nach oben gedrückt. Dabei wandert die Dichtkante nach oben und verläßt den Bereich der Ausprägung, so daß der Topf dicht ist. Die Ausprägung dient im Zusammenwirken mit der Dichtkante des Dichtungsringes somit als Sicherungseinrichtung, weil ein dichter Abschluß des Topfinnenraumes nur dann gewährleistet ist, wenn die vorgesehene Endstellung von Deckel und Topf erreicht ist. Nur in dieser Stellung ist gewährleistet, daß der Deckel sich nicht unbeabsichtigt aufgrund der im Topf herrschenden Drücke abheben kann und somit eine Gefahr für die Bedienungsperson darstellen kann.

Aufgrund der erfindungsgemäßen Schließeinrichtung und des Wegfalls eines Stielgriffes kann nunmehr das Druckentlastungs- und Entlüftungsventil an beliebiger Stelle in der Haube des Dampfdruckdeckels angeordnet werden. Gemäß einer besonderen Ausführungsform weist das Druckentlastungs- und Entlüftungsventil als Ventilkörper eine, in eine Öffnung der Haube gegen die Kraft einer Druckfeder begrenzt beweglich gelagerte, sich in das Deckelinnere erstreckende Hülse auf, die an der Deckelaußenseite eine Lochscheibe mit einer Ventilöffnung trägt, die von einer in der Hülse beweglich angeordneten Ventilkugel verschließbar ist. Das Druckentlastungs- und Entlüftungsventil ist somit im wesentlichen in das Deckelinnere verlagert, so daß es das Erscheinungsbild des Dampfdruckdeckels nicht beeinträchtigt.

Die Hülse ist vorzugsweise unter Freilassung eines ringförmigen Dampfaustrittskanals in einem aus gummielastischem Material bestehenden Einsatz angeordnet, dessen stirnseitige Außenfläche den Ventilsitz bildet, der mit einer an der Hülse ausgebildeten Dichtkante zusammenwirkt. Der Vorteil dieses Druckentlastungs und Entlüftungsventils besteht darin, daß die Einzelteile auf einfache Weise herstellbar und somit kostengünstig sind. Der Zusammenbau des Druckentlastungs und Entlüftungsventils ist mit wenigen Handgriffen möglich.

Zusätzlich weist der Dampfdruckdeckel eine Druckanzeige- und Abdampfeinrichtung auf, deren wesentlichen Bestandteile bis auf die von außen sichtbaren Farbringe ebenfalls in das Innere des Dampfdruckdeckels verlagert sind. Gemäß einer bevorzugten Ausführungsform weist die Druckanzeige- und Abdampfeinrichtung eine, in einer Öffnung der Haube begrenzt verschieblich angeordnete, sich in das Deckelinnere erstreckende Hülse auf, in der ein Kolben gegen die Kraft einer Druckfeder beweglich gelagert ist, wobei der Kolben an seinem ins Deckelinnere weisenden Ende an einer die Hülse umschließenden Rollmembrane anliegt und an seinem nach außen weisenden Ende die Farbringe trägt. Die Rollmembrane greift in eine nach innen weisende Ringsicke der Hülse ein. An der Innenseite der Ringsicke stützt sich von unten ein Federteller und von oben eine auf dem Kolben befestigte Buchse ab. Die Öffnung der Haube ist vorzugsweise in einer Einprägung der Haube angeordnet, die an ihrem oberen, äußeren Band mindestens eine sich radial erstreckende Nut aufweist, die als sickenförmige Einprägung ausgebildet sein kann. Vorteilhafterweise trägt die Hülse an der Haubenaußenseite eine gummielastische Lochscheibe, die die Einprägung überdeckt und mit ihrem Rand auf dem oberen äußeren Rand aufliegt. Die Lochscheibe weist an ihrer der Einprägung zugewandten Seite Distanzelemente auf, die beispielsweise in Form von Noppen ausgebildet sein können.

Zum Öffnen des Topfes muß der Deckel nach unten gedrückt und gedreht werden. Um dies zu ermöglichen, muß der vorhandene Überdruck vollständig abgebaut werden. Dies erfolgt durch eine Druckanzeige und Abdampfeinrichtung. Zunächst wird der Kolben soweit nach unten gedrückt, bis die Distanzelemente der gummielastischen Lochscheibe gegen die äußere Fläche der Einprägung der Haube aufliegen. Dadurch wird die Rollmembrane von der unteren Fläche der Einprägung weggedrückt und der zwischen der Hülse und der Haubenöffnung befindliche Ringspalt zum Abdampfen freigegeben.

Der erfindungsgemäße Topf bietet den Vorteil, daß er auch zusammen mit einem Dämpfeinsatz und einem entsprechenden Deckel verwendet werden kann. Herkömmliche Kochtöpfe sind üblicherweise mit einem Deckel ausgestattet, der so ausgebildet ist, daß genügend Dampf entweichen kann, um beim Kochen das Klappern des Deckels zu vermeiden. Beim Dämpfen hingegen sollte möglichst wenig Dampf aus dem Topf entweichen. Um diese widersprechenden Forderungen mit einem Deckel zu erfüllen, weisen bekannte Deckel eine im Griffbeschlag integrierte verschließbare Öffnung auf. Nachteilig an dieser Ausführungsform ist der erhöhte technische Aufwand, Schmutzecken und Einschränkungen in der Gestaltung des Griffbeschlages. Ein weiterer Nachteil besteht darin, daß das Öffnen bzw. Schließen dieser Öffnungen vergessen werden kann, so daß auch bei diesen Deckeln das Klappern nicht verhindert werden kann und das Kochgut überschäumt.

Um hier Abhilfe zu schaffen, wird ein Dämpfeinsatz vorgeschlagen, der dadurch gekennzeichnet ist, daß die Umfangswand einen sich am Boden anschließenden unteren zylindrischen Wandabschnitt und einen sich am Rand anschließenden oberen zylindrischen Wandabschnitt aufweist, wobei der obere Wandabschnitt einen größeren Durchmesser aufweist als der untere Wandabschnitt und beide Wandabschnitte über einen flanschartigen Übergangsabschnitt miteinander verbunden sind, der an die Kontur der Topfsegmente angepaßt ist. Damit der Dämpfeinsatz die Umfangswand des Topfes und seine Topfsegmente nicht berührt, ist der Außendurchmesser der Wandabschnitte und des flanschartigen Übergangsabschnitts kleiner als die Innenabmessungen des Topfes gewählt. Der Dämpfeinsatz liegt somit lediglich mit seinem Rand auf dem Schüttrand des Topfes auf.

Der hierzu passende Deckel ist dadurch gekennzeichnet, daß die zylindrische Umfangswand einen an die Haube angrenzenden oberen Wandabschnitt aufweist, der über einen Übergangsabschnitt in einen unteren Wandabschnitt übergeht, wobei der Durchmesser des unteren Wandabschnitts kleiner ist als der des oberen Wandabschnitts. Dieser Deckel kann sowohl mit als ohne Dämpfeinsatz verwendet werden. Die Außendurchmesser der beiden Wandabschnitte des Deckels sind kleiner als der Innendurchmesser der Umfangswand des Topfes, so daß der untere Wandabschnitt des Deckels auf die Topfsegmente aufsetzbar ist. Die Zentrierung des Deckels erfolgt in diesem Fall mittels des Übergangsabschnittes im Zusammenwirken mit der Umfangswand des Topfes. Da dieser Übergangsabschnitt nicht abdichtend an der Umfangswand anliegt und zwischen den Topfsegmenten Segmentlücken vorhanden sind, ist keine zusätzliche Öffnung im Deckel notwendig. Beim Kochen kann daher der sich im Innenraum des Topfes bildende Schaum in den Freiraum zwischen Umfangswand des Deckels und Umfangswand des Topfes ausdehnen und verteilen, wo er aufgrund der niedrigeren Temperatur in sich zusammenfällt und als Flüssigkeit nach unten in den Topf zurückfließt.

Zur Verwendung des Deckels zusammen mit dem Dämpfeinsatz ist der Außendurchmesser des oberen Wandabschnitts des Deckels vorzugsweise größer und der Außendurchmesser des unteren Wandabschnittes des Deckels kleiner als der Innendurchmesser des oberen Wandabschnitts des Dämpfeinsatzes ausgebildet, so daß der Deckel lediglich mit seinem Übergangsabschnitt den Dämpfeinsatz berührt. Die Auflage erfolgt somit mittels des Übergangsabschnittes und die Zentrierung mittels der Umfangswand des Deckels. Die Funktion von Übergangsabschnitt und Umfangswand ist bei Verwendung eines Dämpfeinsatzes gerade umgekehrt wie bei der Verwendung ohne Dämpfeinsatz. Die Ausgestaltung von Deckel und Dämpfeinsatz bietet den Vorteil, daß der im Topf entstehende Dampf an der Innenseite des kühleren Deckels kondensiert, so daß so gut wie kein Dampf aus dem Topf entweichen kann. Der Topf kann daher nicht trocken kochen.

Empfindliche Speisen, die nicht überhitzt werden dürfen, werden im Wasserbad gegart. Hierzu wird üblicherweise ein sogenannter Simmertopf verwendet, der im wesentlichen aus einem doppelwandigen Topf besteht, dessen Hohlraum durch eine im Bereich seines Schüttrandes angebrachte Öffnung teilweise mit Wasser gefüllt wird. Nachteilig ist bei den bekannten Simmertöpfen, daß nicht zu erkennen ist, wieviel Wasser in den Hohlraum gegeben wurde. Befindet sich zu viel Wasser im Hohlraum, kocht dieses über, ist zu wenig Wasser vorhanden, kann der Simmertopf trockenkochen. Der Hohlraum ist schlecht zugänglich und somit schlecht zu reinigen.

Um diese Nachteile zu vermeiden, ist ein Simmereinsatz für den erfindungsmäßen Topf vorgesehen, der dadurch gekennzeichnet ist, daß an der Außenseite der Umfangswand des Simmereinsatzes Halte- und Schließelemente angeordnet ist, die mit den Topfsegmenten zusammenwirken. Diese Halte- und Schließelemente umfassen mindestens einen nach außen vorstehenden Lappen, der eine sich in Umfangsrichtung erstreckende federnde Zunge zum Untergreifen der Topfsegmente aufweist. Vorteilhafterweise weist die Zunge an ihrem freien Ende eine nach oben weisende Ausprägung auf. Mittels diese Lappen und Zungen wird der Simmereinsatz durch eine Drehbewegung innerhalb des Topfes fixiert.

Um beim Herausnehmen des Simmereinsatzes aus dem Topf ein Verbiegen oder Abbrechen der Zunge zu verhindern, ist zusätzlich beabstandet zu jeder Zunge ein nach außen vorstehender Sicherungslappen an der Umfangswand des Simmereinsatzes vorgesehen. Dieser Sicherungslappen schiebt sich beim Zusammensetzen von Topf und Simmereinsatz zunächst unter die Topfsegmente und muß sich beim Auseinandernehmen von Topf und Simmereinsatz vollständig von den Topfsegmenten gelöst haben, bevor der Simmereinsatz herausgenommen werden kann.

Weiterhin sind vorteilhafterweise nach außen vorstehende Lappen vorgesehen, die derart nach oben versetzt und beabstandet zum Lappen mit den Zungen angeordnet ist, daß sie in Schließstellung an dem zugeordneten Topfsegment anstoßen.

Um die Herstellung der Lappen zu vereinfachen, sind diese vorzugsweise als Bestandteile eines an der Außenseite der Umfangswand angeordneten Rings ausgebildet, der beispielsweise angeschweißt sein kann.

Oberhalb des Rings ist ein Dichtungsring angeordnet, der an seiner Außenseite eine umlaufende Dichtkante aufweist. Dieser Dichtungsring kann genauso ausgebildet sein, wie der Dichtungsring des Dampfdruckdeckels.

Bekannte Schneidgeräte wie Raspel, Hobel oder Reibe besitzen eine rechteckige Form und müssen mit der Hand an der Schmalseite festgehalten werden, so daß die Schneidfläche einen mehr oder weniger steilen Winkel einnimmt. Die andere Hand führt das zu bearbeitende Gut über die Schneidfläche, wobei die Hand durch die dauernd wiederholende Bewegung ermüdet. Außerdem besteht die Gefahr der Verletzung. Um diese Gefahr zu vermeiden, sind Geräte bekannt, bei denen das Schneidgut mit einem Stopfer durch einen Schacht, der wiederum in einem Schlitten geführt ist, der Schneidfläche zugeführt wird. Nachteilig bei diesen Geräten ist jedoch die Tatsache, daß das bearbeitete Schneidgut nicht unmittelbar in einen Topf gelangt, da die oben beschriebene Handhabung in einem Gefäß nicht möglich ist. Um dies zu ermöglichen, sind Geräte bekannt, deren Schneidflächen die Form einer flachen Schale mit Rand haben. Diese muß auf einen eigenen, hierfür passenden Topf gesetzt werden. Das zu bearbeitende Gut wird quer über die Schale hin- und herbewegt. Bedingt durch den geringen Durchmesser des dazugehörigen Topfes steht nur ein sehr kurzer Weg zur Verfügung, so daß die Hand häufiger hin- und herbewegt werden muß. Wegen des kurzen zur Verfügung stehenden Weges ist kein Raum vorhanden, um eine Zuführung des zu bearbeitenden Gutes durch einen Schacht zu ermöglichen. Ferner bleibt die Verletzungsgefahr bestehen.

Diese Nachteile bestehen bei dem erfindungsgemäßen, für den Topf passenden Schneideinsatz nicht, der eine runde in den Topf einsetzbaren Scheibe aufweist, die in einem Flächenbereich Schneidelemente, insbesondere zum Schneiden, Hobeln oder Raspeln aufweist. Dieser Schneideinsatz ist dadurch gekennzeichnet, daß am Außenumfang der Schneidscheibe abwechselnd nach oben und unten abstehende Laschen derart angeordnet sind, daß sich die nach oben weisenden Laschen auf den Topfsegmenten und die nach unten weisenden Laschen zwischen den Topfsegmenten befinden und daß die Schneidscheibe Mittel zur drehbaren Lagerung eines Drehtellers aufweist. Mittels der Anordnung der Laschen wird der Schneideinsatz im Topf auf einfache Weise arretiert, so daß die Schneidscheibe nicht von Hand gehalten werden muß. Zur Stabilisierung befinden sich zwischen den Laschen ebenfalls abwechselnd nach oben und nach unten abgekantete Stege.

Der Drehteller ist vorzugsweise mittig gelagert und kann am Rand aufliegen. Gemäß einer Ausführungsform ist für die drehbare Lagerung des Drehtellers vorzugsweise im Zentrum der Schneidscheibe ein Loch vorgesehen, in das ein im Mittelpunkt des Drehtellers angeordneter Napf einsetzbar ist, dessen äußerer Durchmesser so dimensioniert ist, daß er mit geringem Spiel in dieses Loch paßt. Der Drehteller kann am äußeren Rand umgebördelt sein, so daß er nur mit dieser Umbördelung auf der Schneidscheibe aufliegt. Dadurch wird die Reibung zwischen Drehteller und Schneidscheibe erheblich verringert.

Vorteilhafterweise weist der Drehteller einen exzentrisch angeordneten, als Zuführschacht für das zu schneidende Gut ausgebildeten Drehgriff auf. Der Drehgriff kann eine den Zuführschacht umgebende und auf diesem drehbar gelagerte Hülse aufweisen. Im Zuführschacht ist ein Stopfer angeordnet, mit dem das zu schneidende Gut auf die Schneidscheibe gedrückt werden kann. Da der Drehgriff nicht nur um die Hülse drehbar, sondern auch in axialer Richtung der Hülse verschiebbar angeordnet ist, kann mit einer Hand die Drehbewegung ausgeführt werden und gleichzeitig der Stopfer in den Schacht gedrückt werden. Dadurch wird die Handhabung der Schneideinrichtung erheblich vereinfacht.

Beispielhafte Ausführungsformen der Erfindung werden nachfolgend anhand der Zeichnungen näher erläutert.

Es zeigen:
- Figur 1: eine Seitenansicht des Dampfdruckkochtopts in geschlossener Lage,
- Figur 2: eine Draufsicht auf den in Figur 1 gezeigten Topf,
- Figuren 3 und 4: Details des Topfes teilweise in Schnittdarstellung längs der in Fig. 2 eingezeichneten Linien A-A bzw. B-B,
- Figur 5: die in Fig. 4 gezeigte Ausprägung im Horizontalschnitt,
- Figur 6: eine Seitenansicht der Deckelhaube,
- Figur 7: eine Unteransicht des in Figur 6 gezeigten Dampfdruckdeckels,
- Figuren 8 und 9: Details des Dampfdruckdeckels teilweise im Schnitt,
- Figur 10: eine Feder in Draufsicht,
- Figuren 11 bis 14: das Zusammenwirken von Topfsegmenten und Deckelsegmenten in verschiedenen Stadien des Schließvorgangs,
- Figuren 15 und 16: Teilschnittdarstellungen des geschlossenen Dampfdruckkochtopfes,
- Figuren 17 bis 19: ein Druckentlastungs- und Entlüftungsventil im Langsschnitt in verschiedenen Stellungen,
- Figuren 20 bis 22: eine Druckanzeige- und Abdampfeinrichtung im Langsschnitt in verschiedenen Stellungen,
- Figur 23: den Topf mit Dämpfeinsatz und passendem Deckel im Schnitt,
- Figuren 24 und 25: Details des in Figur 23 gezeigten Topfes teilweise im Schnitt,
- Figur 26: einen Schnitt durch den Topf mit Simmereinsatz,
- Figur 27: eine Unteransicht des in Fig. 26 gezeigten Simmereinsatzes,
- Figuren 28 bis 32: Details von Topf und Simmereinsatz bzw. nur des Simmereinsatzes teilweise im Schnitt,
- 0Figuren 33 bis 36: das Zusammenwirken der Lappen des Simmereinsatzes mit den Topfsegmenten in verschiedenen Stadien des Arretiervorgangs,
- Figur 37: den Topf mit Schneideinsatz in Draufsicht,

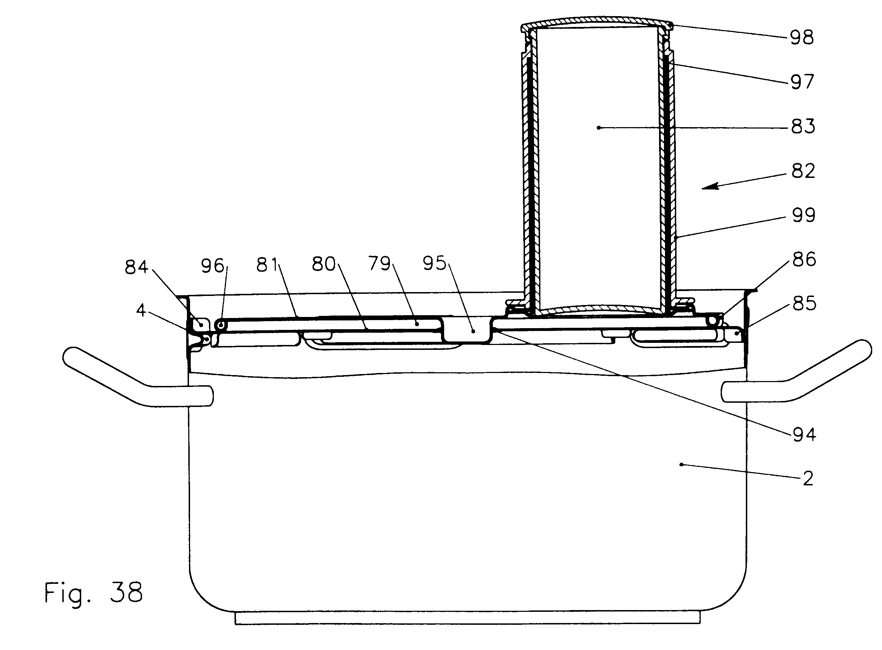

- Figur 38: den in Figur 37 gezeigten Topf mit Schneideinsatz teilweise im Schnitt, teilweise in Seitenansicht,

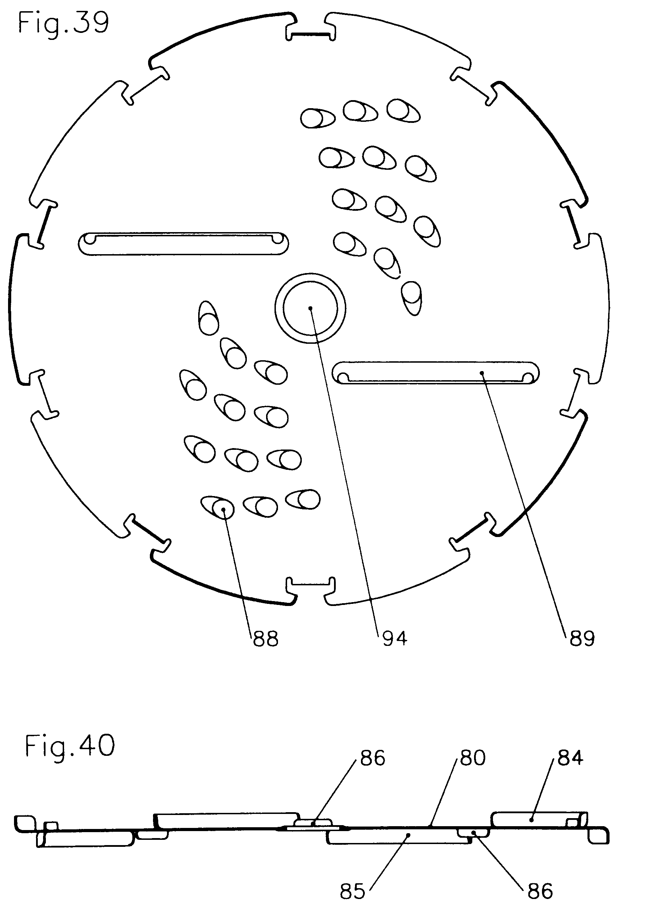

- Figur 39: eine Schneidscheibe in Draufsicht, und
- Figur 40: die in Figur 39 gezeigte Schneidscheibe im Schnitt, jedoch ohne Messereinrichtungen.

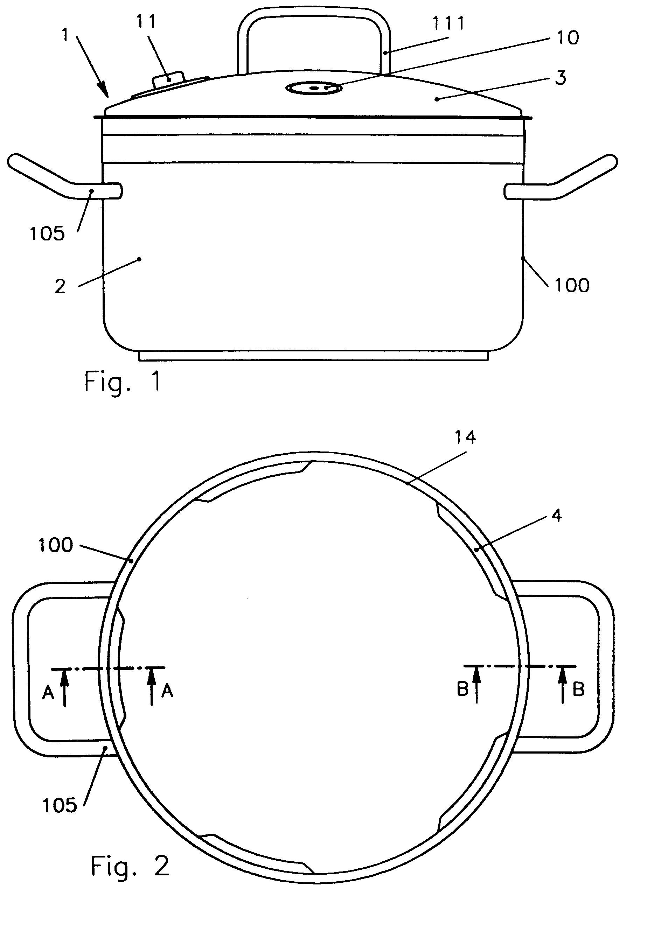

In der Figur 1 ist der Topf 2 mit dem Dampfdruckdeckel 3 in seiner eVerwendung als Dampfdruckkochtopf 1 in Seitenansicht dargestellt. Aufgrund der in das Topfinnere verlagerten Topf- und Deckelsegmente unterscheidet sich der Dampfdruckkochtopf 1 bis auf das im Dampfdruckdeckel 3 angeordnete Druckentlastungs- und Entlüftungsventil 10 und die Druckanzeige- und Abdampfeinrichtung 11 nicht von herkömmlichen Kochtöpfen. Hierzu trägt auch bei, daß kein Stielgriff vorhanden ist, wie dies bei herkömmlichen Dampfdruckkochtöpfen der Fall ist. An der Umfangswand 100 des Topfes 2 sind zwei bügelförmige Topfgriffe 105 angeordnet, die der Ausgestaltung des Deckelgriffs 111 entsprechen.

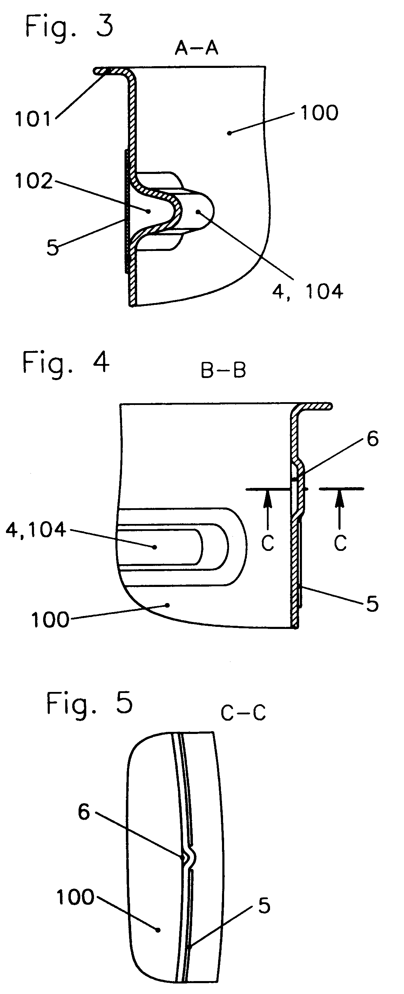

In der Figur 2 ist die Draufsicht auf den in Figur 1 gezeigten Topf 2 dargestellt. Der Topf 2 hat in seinem oberen Bereich der Umfangswand 100 in dem hier gezeigten Ausführungsbeispiel insgesamt fünf, über den Umfang verteilte Topfsegmente 4, die, wie in den Figuren 3 und 4 dargestellt ist, als von außen nach innen geprägte Topfsicken 104 ausgebildet sind. Die von außen sichtbaren Vertiefungen 102 sind durch ein aufgeschweißtes Band 5 abgedeckt. Ebenfalls im oberen Teil der Umfangswand 100 des Topfes 2 befinden sich im Bereich der zwischen den Topfsegmenten 4 befindlichen Segmentlücken 14, vorzugsweise im Bereich der Topfgriffe 105 mindestens eine nach außen weisende, sich vertikal erstreckende Ausprägung 6, die im Zusammenhang mit dem Dichtelement 8 des Dampfdruckdeckels 3 noch näher beschrieben wird. Die Ausprägung 6 befindet sich etwas oberhalb der Topfsicke 104 und ist wie in der Figur 5 dargestellt ist, als von innen nach außen geprägte Sicke ausgeführt, die sich über eine begrenzte Strecke der Umfangswand 100 in axialer Richtung des Topfes 2 erstreckt.

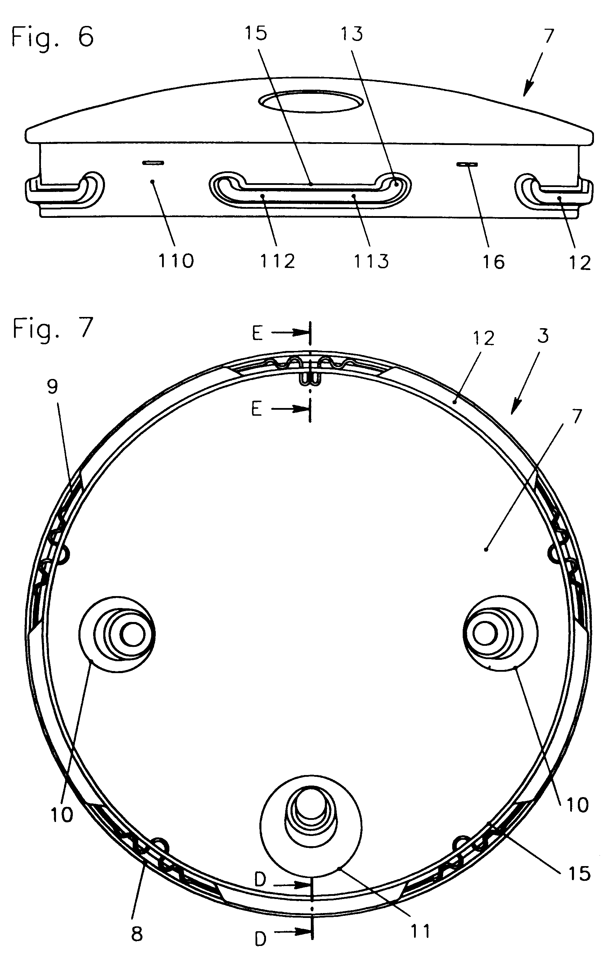

Der in Figur 6 in Seitenansicht gezeigte Dampfdruckdeckel 3 (ohne Feder, Dichtungselement, Griff und Ventile) ist als Steckdeckel ausgebildet und besteht aus einer Haube 7, an die sich nach unten eine zylindrische Umfangswand 110 anschließt. Der Dampfdruckdeckel 3 trägt an seiner Umfangswand 110 Deckelsegmente 12, deren Anzahl der Anzahl der Topfsegmente 4 entspricht. Auch diese Deckelsegmente 12 sind als von innen nach außen geprägte Sicken (Deckelsicken 112) ausgebildet. Die Deckelsicken 112 besitzen einen sich in Umfangsrichtung horizontal erstreckenden Mittelabschnitt 113, der in nach oben gebogene Endabschnitte 13 übergeht. Zwischen und etwas oberhalb der Deckelsicken 112 sind in der Umfangswand 110 Schlitze 16 zur Aufnahme einer Feder 9 vorgesehen, die in der Figur 7 zu sehen ist, die die Unteransicht des in Figur 6 gezeigten Dampfdruckdeckels 3 zeigt. Aus Sicherheitsgründen sind in der Haube 7 zwei Druckentlastungs- und Entlüftungsventile 10 vorgesehen. Im linken Teil der Haube 7 ist eine Druckanzeige und Abdampfeinrichtung 11 dargestellt.

Die Topfsegmente 4 und die Deckelsegmente 12 von Topf und Deckel sind so bemessen, daß die Deckelsegmente 12 in die Segmentlücken 14 des Topfes 2 und die Topfsegmente 4 des Topfes in die Lücken 15 zwischen die Endabschnitte 13 der Deckelsegmente 12 passen.

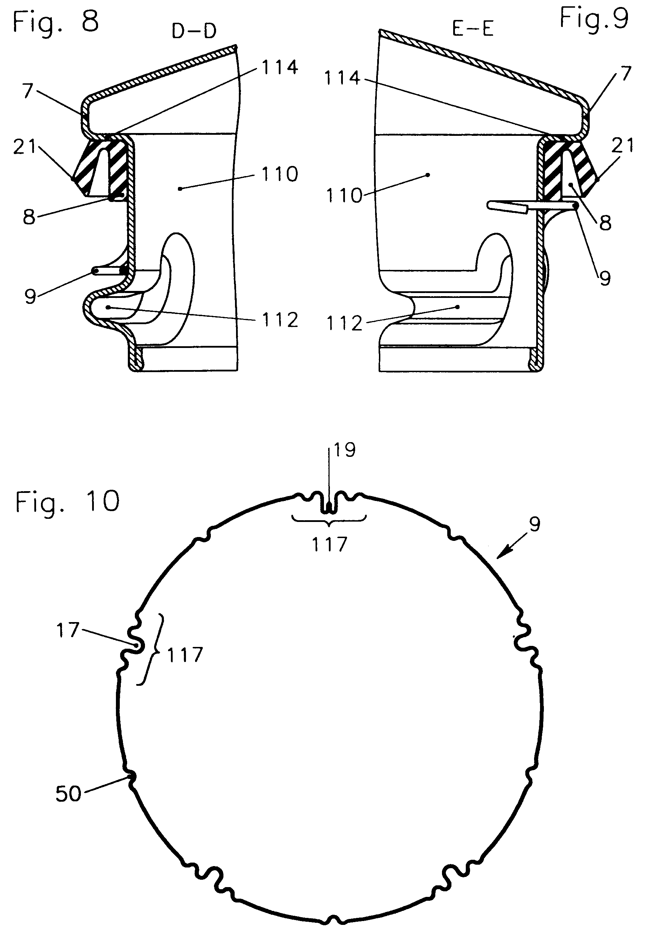

In den Figuren 8 und 9 sind Schnitte durch den Dampfdruckdeckel 3 längs der in Figur 7 gezeigten Linien D-D bzw. E-E dargestellt. Die Haube 7 steht gegenüber der Umfangswand 110 radial nach außen vor, so daß zwischen der Haube 7 und der Umfangswand 10 ein horizontaler Übergangsabschnitt 114 gebildet wird, an dessen Unterseite das Dichtelement 8, das als Dichtungsring ausgebildet ist, anliegt. Wie in der Figur 9 zu sehen ist, wird das Dichtungselement 8 mittels der Feder 9 gehalten und gegen den horizontalen Übergangsabschnitt 114 gedrückt. Der Dichtungsring 8 ist im wesentlichen V-förmig ausgebildet und besitzt an seiner Außenseite eine Dichtkante 21, die radial gegenüber der Haube 7 bzw. gegenüber der nach außen weisenden Deckelsicke 112 geringfügig vorsteht. Aufgrund der V-förmigen Ausbildung des Dichtungsrings 8 kann beim Einsetzen des Dampfdruckdeckels 3 in den Topf 2 die Dichtkante 21 radial nach innen zurückweichen, so daß immer ein dichtes Anliegen an der Innenseite des Topfes 2 gewährleistet ist.

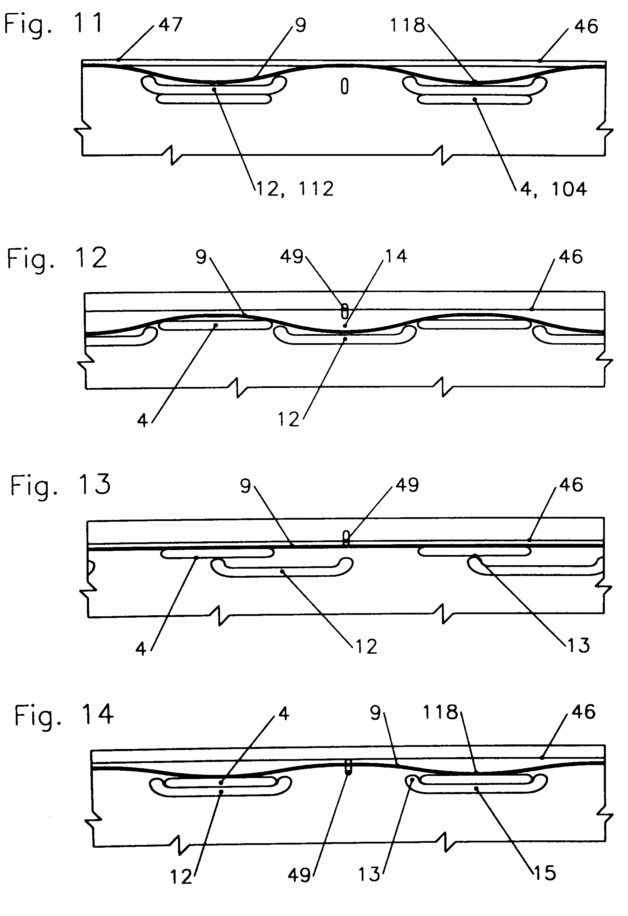

In der Figur 10 ist die Draufsicht auf die Feder 9 gezeigt. Die Feder 9 besitzt mäanderförmige Abschnitte 117 mit Ausbuchtungen 17, die in die Schlitze 16 des Dampfdruckdeckels 3 eingreifen. Die Feder 9 kann als Drahtring ausgeführt sein, dessen Enden als Widerhaken 19 ausgebildet sind. Auch diese Widerhaken 19 greifen in einen Schlitz 16 des Dampfdruckdeckels 3 ein. Zusätzlich ist die Feder 9 wellenförmig gebogen, wie dies aus den Figuren 11 bis 14 zu entnehmen ist.

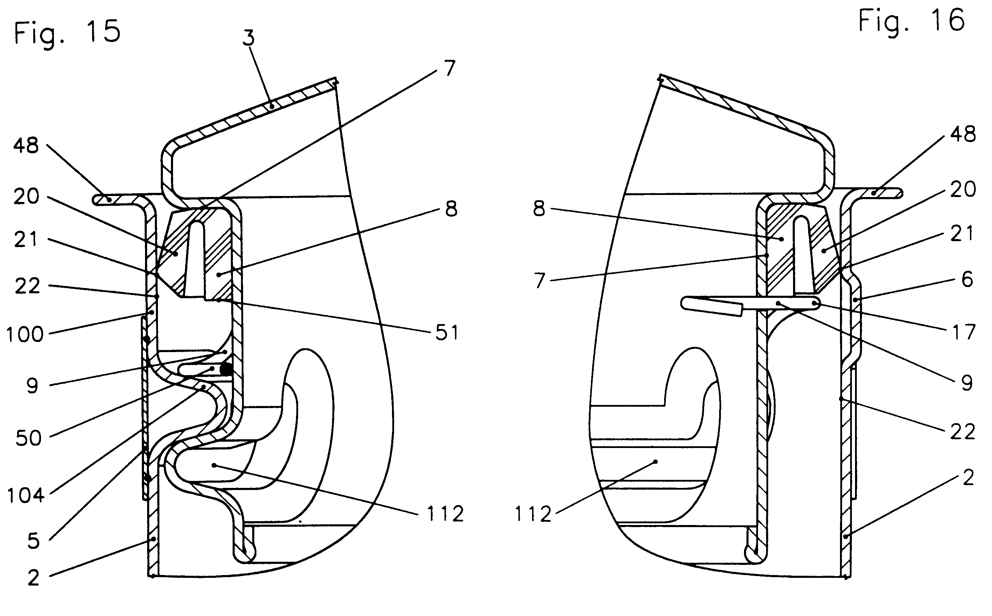

Nachdem das Kochgut in den Topf 2 gegeben wurde, wird der Dampfdruckdeckel 3 beliebig aufgesetzt. Meistens werden die Deckelsegmente 12 auf die Topfsegmente 4 zu liegen kommen, wie dies in der Figur 11 zu sehen ist. Die Wellentäler 118 der Feder 9 liegen im Bereich der Deckelsicken 112. Die der umlaufenden Dichtkante 21 entsprechende Dichtlinie liegt oberhalb der Linie 47, die dem umlaufenden Schüttrand 48 des Topfes (s. Figur 15) entspricht. In dieser Deckelstellung ist der Dampfdruckkochtopf 1 ringsum noch undicht. Wird der Dampfdruckdeckel 3 in beliebiger Richtung gedreht, so gleitet der Dampfdruckdeckel 3 mit der unteren Fläche seiner Deckelsegmente 12 auf der oberen Fläche der Topfsegmente 4. Sobald der Dampfdruckdeckel 3 die Position der Figur 12 erreicht hat, bei der die Deckelsegmente 12 sich in Deckung mit den Lücken 14 der Topfsegmente 4 befinden, fällt der Dampfdruckdeckel 3 durch sein Eigengewicht nach unten, bis die Feder 9 auf den Topfsegmenten 4 aufliegt. Die Dichtlinie 46 schneidet die Fläche 49, die der Fläche der Ausprägung 6 entspricht. Auch in dieser Stellung ist der Dampfdruckkochtopf 1 noch undicht.

Wird der Dampfdruckdeckel 3 in beliebiger Richtung weitergedreht, wie dies in der Figur 13 dargestellt ist, gleiten die der Drehrichtung entsprechenden Endabschnitte 13 der Deckelsegmente 12 mit ihrer Oberseite auf die untere Fläche der Topfsegmente 4. Die Feder 9 gleitet auf die obere Fläche der Topfsegmente 4 und wird zunehmend gespannt. Der Dampfdruckdeckel 3 kann durch äußere Krafteinwirkung nur so weit nach unten gedrückt werden, bis die mäanderförmigen Ausbuchtungen 50 (s. Figur 10) gegen die untere Fläche 51 des Dichtelementes 8 aufliegen (s. Figur 15). Auch dann schneidet die Dichtlinie 46 noch die Fläche 49, so daß der Dampfdruckkochtopf 1 weiterhin undicht ist.

Sobald der Dampfdruckdeckel 3 die Position gemäß Figur 14 erreicht hat, bei der die Topfsegmente 4 auf den Mittelabschnitten 113 der Deckelsicken 12 aufliegt, wird der Dampfdruckdeckel 3 durch die Kraft der Feder 9 nach oben gedrückt, so daß die nach oben weisenden Endabschnitte 13 der Deckelsegmente 12 die Topfsegmente 4 umfassen. In dieser Stellung drücken die Wellentäler 118 der Feder 9 auf die Oberseite der Topfsegmente 4. Die Dichtlinie 46 schneidet die Fläche 49 nicht mehr, so daß der Dampfdruckkochtopf nunmehr dicht ist und sich in der vorgesehenen geschlossenen Lage befindet.

In den Figuren 15 und 16 ist diese geschlossene Lage im Detail dargestellt. Die Figur 15 zeigt das Aneinanderliegen von Topfsicke 104 und Deckelsicke 112, wobei die beiden Sicken aufgrund der Wirkung der Feder 9 gegeneinandergedrückt werden. Das Dichtelement 8 liegt mit seiner an der federnden Dichtlippe 20 befindlichen Dichtkante 21 abdichtend an der Zylinderfläche 22 der Umfangswand 100 des Topfes 2 an. Wie aus der Figur 16 zu entnehmen ist, liegt die Dichtkante 21 oberhalb der Ausprägung 6, so daß der Topf allseitig geschlossen ist.

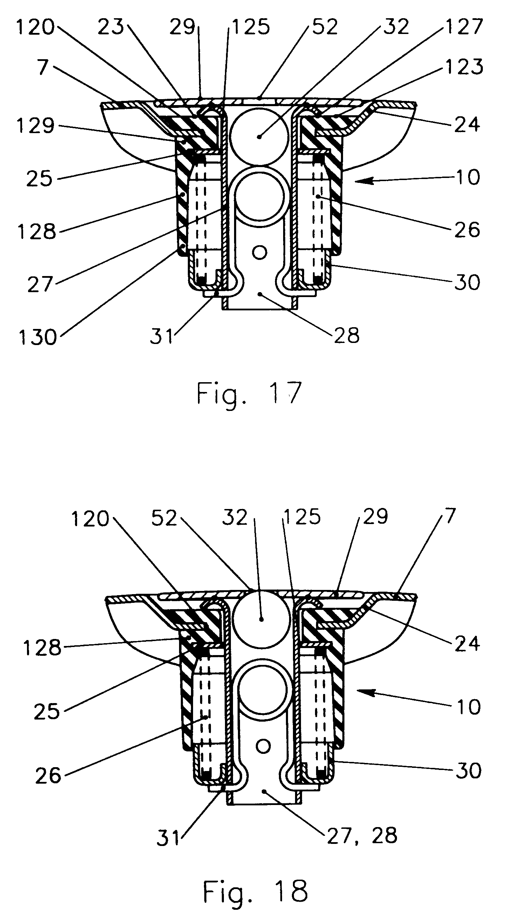

In den Figuren 17 bis 19 ist das Druckbegrenzungs- und Entlüftungsventil 10 dargestellt, das in einer Öffnung 120 einer Einprägung 24 in der Haube 7 eingebaut ist. In diese Öffnung 120 ist ein gummielastischer Einsatz 128 eingeknöpft, der im wesentlichen aus einem oberen zylindrischen Abschnitt 129 und einem unteren zylindrischen Abschnitt 130 besteht. Der obere zylindrische Abschnitt 129 umgreift die Öffnung 120 und besitzt einen größeren Innendurchmesser als der sich in das Deckelinnere erstreckende untere Abschnitt 130. Im Übergangsbereich zwischen dem oberen und dem unteren zylindrischen Abschnitt 129, 130 befindet sich eine eingeknöpfte Scheibe 25, die als Wiederlager für eine Druckfeder 26 dient, die an der Unterseite an einem Federteller 30 anliegt. Durch den gummielastischen Einsatz 128 erstreckt sich als Ventilkörper 27 eine Hülse 28, die auf der Deckelaußenseite eine aufgeschweißte Lochscheibe 29 trägt. In der Hülse ist eine Drehfeder 31 eingesetzt, die sich mit ihren Endabschnitten nach außen erstreckt, so daß sich der Federteller 30 hierauf abstützen kann. Die Drehfeder 31 dient dazu, die innerhalb der Hülse befindliche gummielastische Ventilkugel 32 gegen Herausfallen zu sichern. An der der Lochscheibe 29 zugewandten Seite ist die Hülse 27 unter Ausbildung einer Dichtkante 127 nach außen umgebogen, so daß sie auf der stirnseitigen Außenfläche 123 des oberen zylindrischen Abschnittes 129 des Einsatzes 128 aufliegt, die somit den Ventilsitz 23 bildet. Durch die Vorspannung der Druckfeder 26 wird die Dichtkante 127 der Hülse 27 gegen den Ventilsitz 23 gedrückt.

Wird dem Topf Wärmeenergie zugeführt, wird im Dampfdruckkochtopf 1 Dampf erzeugt, der zunächst die im Dampfdruckkochtopf 1 vorhandene Luft durch die Öffnung 52 in der Lochscheibe 29 im Druckbegrenzungs- und Entlüftungsventil 10 nach außen verdrängt. Sobald die Dampfentwicklung zunimmt, reißt die verstärkte Dampfströmung die gummielastische Ventilkugel 32 mit sich, so daß diese dichtend gegen die Öffnung 52 anliegt. Dies ist in der Figur 18 dargestellt. Ab jetzt kann sich im Dampfdruckkochtopf 1 ein Druck aufbauen.

Bei Erreichen des maximal zulässigen Kochbetriebsdruckes wirkt dieser gegen den Ventilkörper 27 des Druckbegrenzungs- und Entlüftungsventils 10. Sobald diese Kraft größer als die Vorspannkraft der Druckfeder 26 ist, hebt der Ventilkörper 27 vom Ventilsitz 23 ab. Der Dampf kann durch den so entstandenen Ringspalt 125 zwischen dem oberen zylindrischen Abschnitt 129 des Einsatzes 128 und der Hülse 27 entweichen. Ein höherer Druck kann sich somit nicht mehr aufbauen.

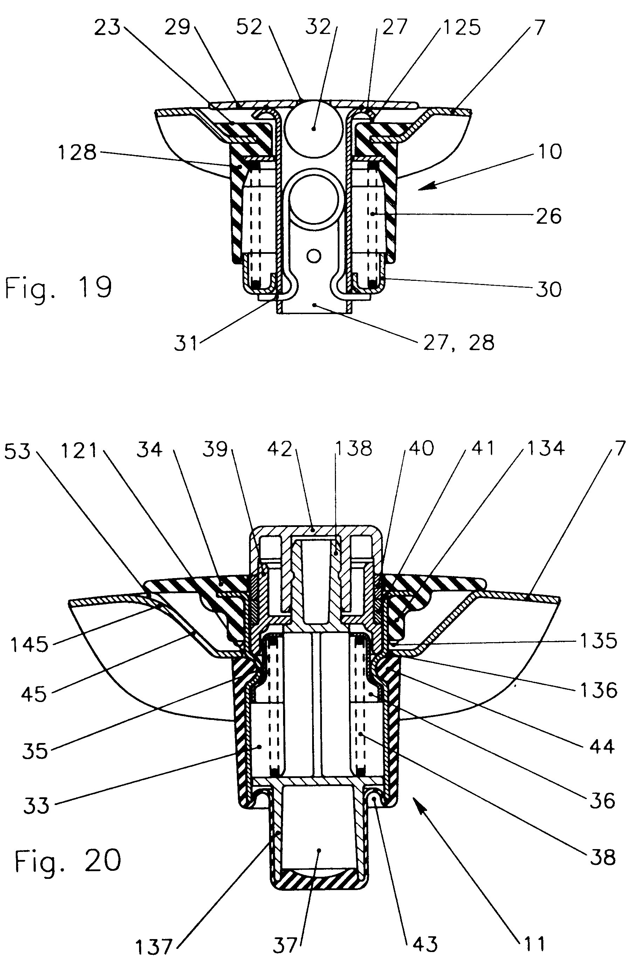

In den Figuren 20 bis 22 ist die Druckanzeige und Abdampfeinrichtung 11 im Schnitt dargestellt, die in einer Öffnung 121 einer Einprägung 45 der Haube 7 eingesetzt ist. Durch die Öffnung 121 erstreckt sich eine Hülse 33, die an ihrem außenliegenden Ende eine gummielastische Lochscheibe 34 trägt. Diese Lochscheibe 34 überdeckt die Einprägung 45 und liegt mit ihrem Rand auf dem Rand 145 der Einprägung 45 auf. Der Rand 145 der Einprägung 45 weist mindestens eine sich radial erstreckende Nut 53 in Form einer Sicke auf. Ferner besitzt die Lochscheibe 34 einen sich nach unten erstreckenden zylindrischen Abschnitt, der an seiner stirnseitigen Fläche Distanzelemente 135 in Form von Noppen trägt. In der in der Figur 20 gezeigten Stellung berühren diese Noppen 135 die Haube 7 nicht. Der Außenumtang der Hülse 33 ist geringer als der Durchmesser der Öffnung 121, so daß zwischen Hülse und Einprägung 45 ein Ringspalt 136 verbleibt.

Unterhalb der Öffnung 121 weist die Hülse 33 eine nach innen weisende Ringsicke 35 auf, in die von außen eine Rollmembrane 43 mit ihrem Wulst 44 eingreift, der in der in Figur 20 gezeigten Stellung den Ringspalt 136 verschließt. Die Rollmembrane 43 erstreckt sich an der Außenseite der Hülse 33 nach unten und umschließt das untere Ende 137 eines in der Hülse 33 beweglich gelagerten Kolbens 37, der mittels einer in der Hülse 33 angeordneten Druckfeder 38 in das Topfinnere gedrückt wird. Die Druckfeder 38 stützt sich einerseits am Kolben 37 und andererseits an einem Federteller 36 ab, der sich seinerseits wiederum an der Unterseite der Ringsicke 35 abstützt. Das nach außen weisende Ende 138 des Kolbens 37 trägt eine aufgesetzte Kappe 42 mit einer Buchse 39, an deren Außenseite Farbringe 40, 41 angeordnet sind. Die Buchse 39 stützt sich in der in der Figur 20 gezeigten Stellung auf der Oberseite der Ringsicke 35 ab. Die Farbringe 40, 41 sind in druckloser Stellung von außen nicht sichtbar und befinden sich innerhalb der Lochscheibe 34. Dadurch, daß der untere Rand der Buchse 39 auf der Oberseite der Ringsicke 35 aufliegt, wird das Herausfallen von Federteller 36, Kolben 37 und Druckfeder 38 verhindert.

Da die gummielastische Lochscheibe 34 mit ihrem äußeren Rand mit Vorspannung auf dem oberen äußeren Band 145 der gelochten Einprägung 45 aufliegt, wird die Hülse 33 und mit ihr die Rollmembrane 43 nach oben gezogen, wodurch die obere Fläche ihres umlaufenden gummielastischen Wulstes 44 dichtend gegen die untere Fläche der Einprägung 45 der Haube 7 anliegt.

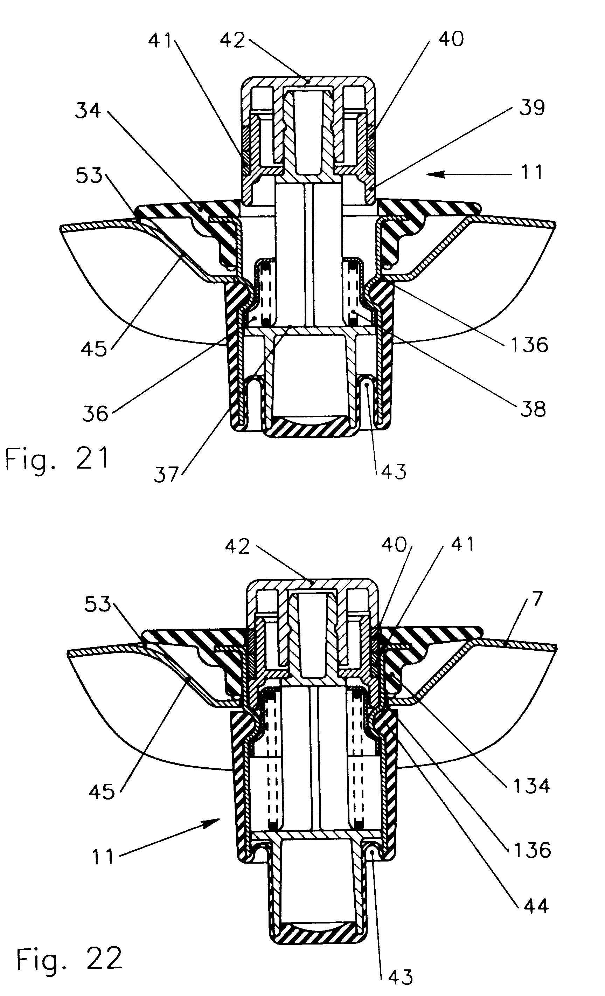

Wenn der Druck im Kochtopf ansteigt, wirkt der Dampfdruck gegen die Rollmembrane 43 der Druckanzeige und Abdampfeinrichtung 11 und drückt somit den Kolben 37 und mit ihm die Buchse 39, die Farbringe 40, 41 und die Kappe 42 gegen die Kraft der Druckfeder 38 nach oben. Bei zunehmendem Druck erscheint oberhalb der gummielastischen Lochscheibe 34 zunächst der z.B. grüne Farbring 40, dann der z.B. gelbe Farbring 41 und schließlich bei Erreichen des maximal zulässigen Kochbetriebsdruckes der z.B. rote untere Teil der Buchse 39, wobei der Kolben 37 gegen den Federteller 36 anschlägt. Diese Endstellung ist in der Figur 21 dargestellt.

Nach beendigtem Kochvorgang kann der Dampfdruckkochtopf 1 nur im drucklosen Zustand geöffnet werden. Dazu wird die Kappe 42, wie in der Figur 22 gezeigt ist, nach unten gedrückt, bis die Noppen 134 der gummielastischen Lochscheibe 34 gegen die äußere Fläche der Einprägung 45 der Haube 7 aufliegen. Damit hebt die obere Fläche des umlaufenden gummielastischen Wulstes 44 der Rollmembrane 43 von der unteren Fläche der Einprägung 45 ab. Dadurch wird der Ringspalt 136 freigegeben und der Dampf kann somit nach außen entweichen.

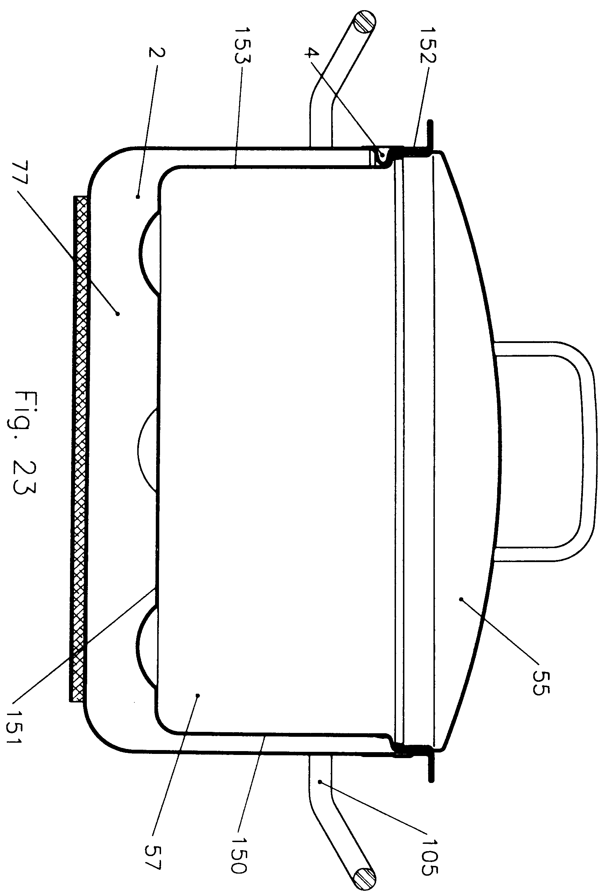

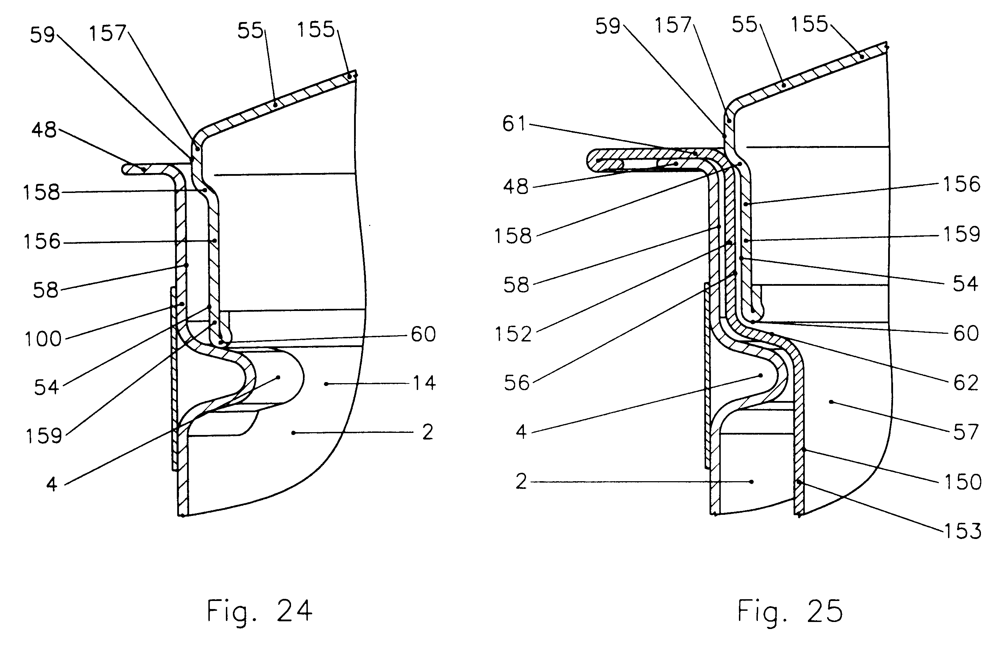

In der Figur 23 ist der Topf 2 mit einem Dämpfeinsatz 57 und einem dazu passenden Deckel 55 im Schnitt dargestellt. Die Details sind in den Figuren 24 und 25 dargestellt, wobei in der Figur 24 der Dämpfeinsatz weggelassen wurde. Der Dämpfeinsatz besitzt eine Bodenwand 151, die in einen unteren zylindrischen Wandabschnitt 153 der Umtangswand 150 übergeht. Nach oben setzt sich der Wandabschnitt 153 in einem sich nach außen erstreckenden Übergangsabschnitt 62 fort, der in einen oberen Wandabschnitt 152 übergeht, der gegenüber dem unteren Wandabschnitt 153 einen größeren Durchmesser aufweist. Der obere Abschnitt 152 besitzt einen Rand 61, mit dem der Dämpfeinsatz 57 auf dem Rand 48 des Topfes 2 aufliegt.

Wie der Figur 25 zu entnehmen ist, ist der Außendurchmesser des unteren Wandabschnitts 159 des Deckels 55 um ein geringes kleiner als der Innendurchmesser der Zylinderfläche 56 des oberen Wandabschnittes 152 des Dämpfeinsatzes. Der Außendurchmesser der Zylinderfläche des oberen Wandabschnitts 152 des Dämpfeinsatzes 57 ist wiederum um ein geringes kleiner als der Innendurchmesser der oberen Zylinderfläche 58 des Topfes 2. Der Außendurchmesser der Aufweitung 59 des Deckels 55 ist um ein geringes kleiner als der Innendurchmesser der oberen Zylinderfläche 58 des Topfes 2, jedoch größer als der Innendurchmesser des oberen Wandabschnitts 152 des Dämpfeinsatzes 57. Die Höhe des Wandabschnittes 159 des Deckels 55 ist so dimensioniert, daß dann, wenn seine untere Kante 60 auf den Topfsegmenten 4 aufliegt, wie dies in der Figur 24 dargestellt ist, der obere Wandabschnitt 157 seiner Aufweitung 59 zum Teil in dem Topf 2 eintaucht, jedoch bei eingesetztem Dämpfeinsatz 57 dann, wenn der Übergangsbschnitt 158 seiner Aufweitung 59 auf den Schüttrand 61 des Dämpfeinsatzes 57 aufliegt, seine untere Kante 60 den flanschartigen Übergangsabschnitt 62 des Dämpfeinsatzes 57 nicht berührt. Der Dämpfeinsatz 57 liegt mit der unteren Fläche seines Schüttrandes 61 auf dem Schüttrand 48 des Topfes 2 auf, wobei der flanschartige Übergangsabschnitt 62 die Topfsegmente 4 nicht berührt (siehe Figur 25).

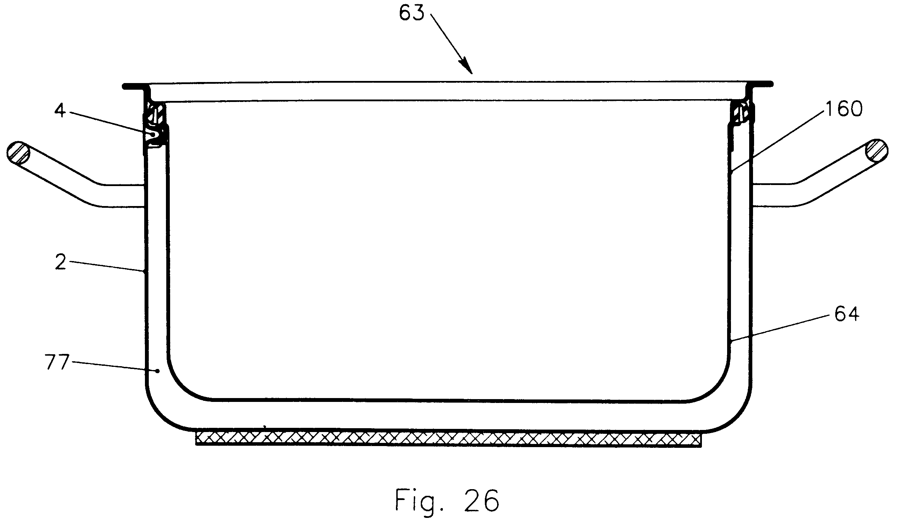

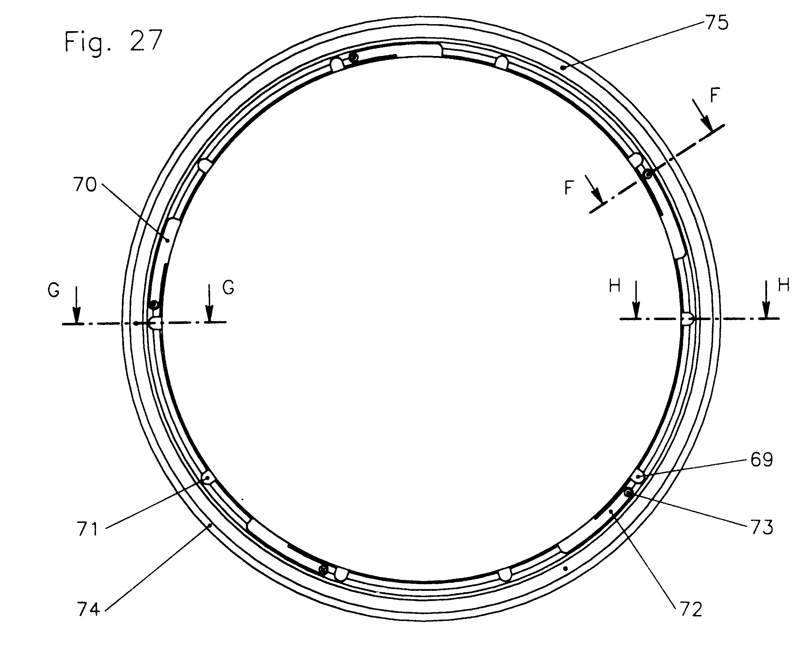

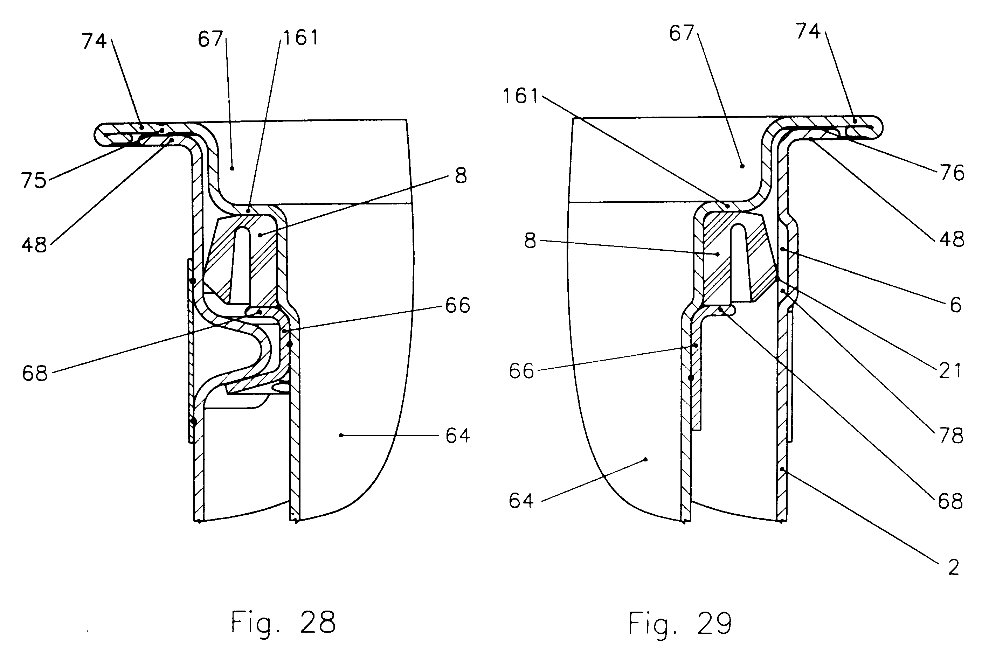

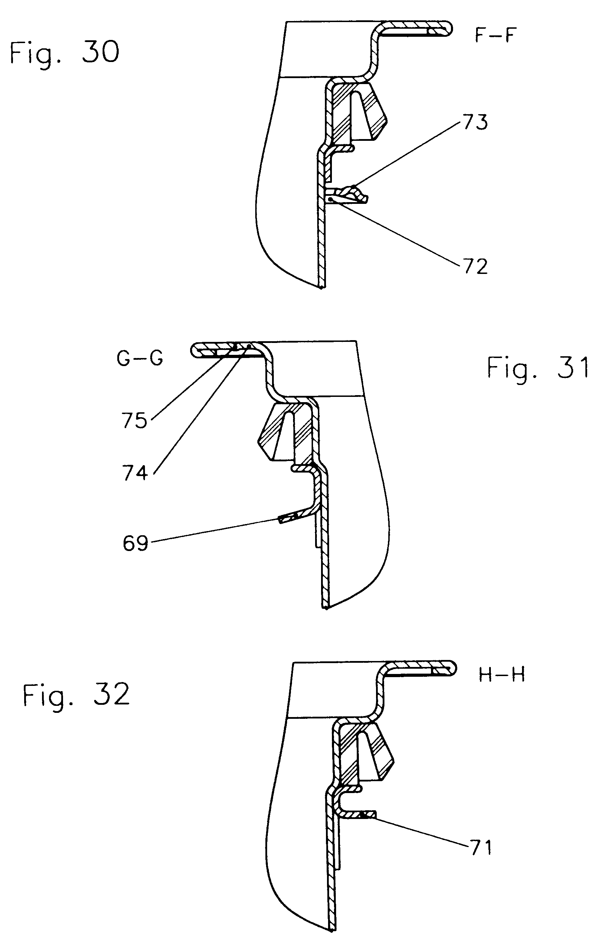

In der Figur 26 ist der Topf 2 mit einem Simmereinsatz 64 dargestellt, der ebenfalls so ausgebildet ist, daß er mit den Topfsegmenten 4 zusammenwirkt und von diesen gehalten wird. Mittels dieses Simmereinsatzes 64 wird der Topf 2 zu einem Simmertopf 63. An der Umfangswand 160 des Simmereinsatzes 64 ist im oberen Bereich ein Ring 66 angeschweißt, über dem ein Dichtelement 8 angeordnet ist, das dem im Zusammenhang mit den Figuren 8 und 9 beschriebenen Dichtelement 8 entspricht. Das Dichtelement 8 wird zwischen der Abkantung 68 des Ringes 66 und dem horizontalen Wandabschnitt 161 der Aufweitung 67 der Umtangswand 160 des Simmereinsatzes 64 gehalten. Am unteren Rand des Ringes 66 sind in gleicher Anzahl wie die Topfsegmente 4 nach außen abgekantete Lappen 69, 70, 71 angeordnet (s. Figuren 27-32). Der Lappen 70 hat eine in Schließrichtung sich fortsetzende federnde Zunge 72, wie dies in der Figur 27 dargestellt ist. Die federnde Zunge 72 weist an ihrem freien Ende eine nach oben weisende Ausprägung 73 auf. Der Schüttrand 74 des Einsatzes 64 hat mindestens drei am Umfang gleichmäßig verteilte, nach unten weisende Ausprägungen 75, so daß bei eingesetztem Simmereinsatz 64 zwischen dem Schüttrand 74 und dem Schüttrand 48 des Topfes 2 ein ringförmiger Spalt 76 entsteht. Wie aus der Figur 29 zu entnehmen ist, ist die Dichtung 8 so angeordnet, daß bei eingebautem Simmereinsatz 64 die der umlaufenden Dichtkante 21 entsprechende Dichtlinie 46 die Fläche 49, die der Fläche der Ausprägung 6 entspricht, schneidet.

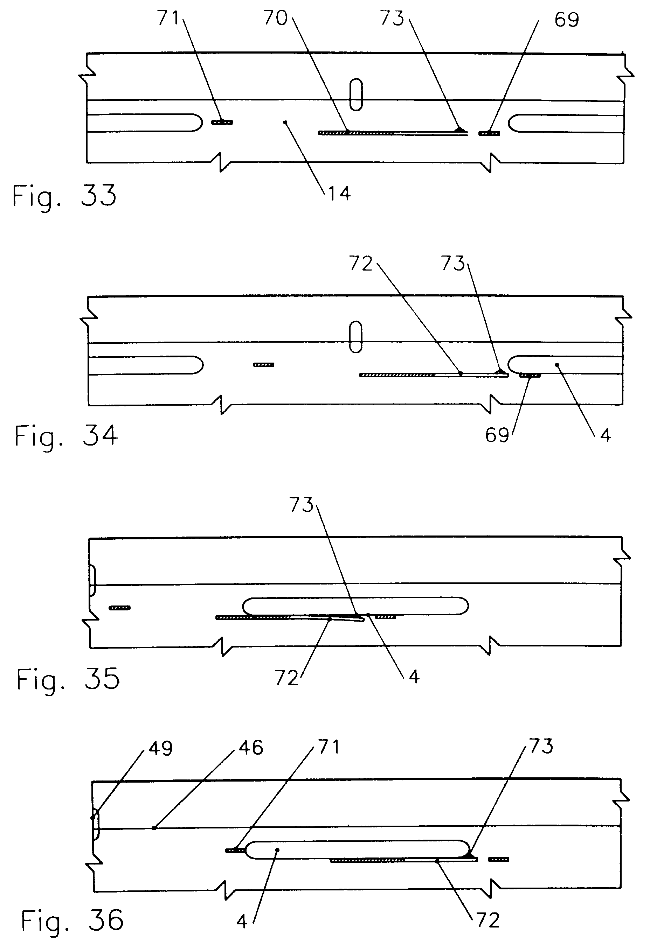

Zunächst wird der Topf 2 mit einer bestimmten Menge Wasser gefüllt. Dann wird der Simmereinsatz 64 so in den Topf 2 eingesetzt, daß die Lappen 69, 70, 71 in die Segmentlücken 14 des Topfes 2 zu liegen kommen (siehe Figur 33). Dabei fällt der Simmereinsatz 64 nach unten, bis die nach unten weisenden Ausprägungen 75 seines Schüttrandes 74 auf dem Schüttrand 48 des Topfes 2 aufliegen. Nun wird der Simmereinsatz 64 im Ausführungsbeispiel nach rechts gedreht. Hierbei schiebt sich zunächst der Lappen 69 unter das entsprechende Topfsegment 4, um zu verhindern, daß bei einem Auseinanderziehen von Topf 2 und Simmereinsatz 64 die Zunge 72 verbogen wird. Wird nun der Simmereinsatz 64 in gleicher Richtung weitergedreht, so schiebt sich die Ausprägung 73 unter das betreffende Topfsegment 4, wobei die federnde Zunge 72 nach unten gespannt wird, wie dies in der Figur 35 dargestellt ist. Schließlich kommt der Lappen 71 gegen das entsprechende Topfsegment 4 zum Anschlag, so daß die Ausprägung 73 von der federnden Zunge 72 getrieben hinter das entsprechende Topfsegment 4 einrastet (siehe Figur 36). Der Simmereinsatz 64 ist im Topf 2 somit arretiert und die Dichtlinie 46 schneidet die Fläche 49, wie in der Figur 29 zu sehen ist.

Wird dem Simmertopf Wärmeenergie zugeführt, kommt das im Hohlraum 77 zwischen Topf 2 und Simmereinsatz 64 vorhandene Wasser zum Kochen. Der so entstehende Dampf kann durch den zwischen der Dichtkante 21 und der Ausprägung 6 entstandenen Spalt 78 (siehe Figur 29) und schließlich durch den ringförmigen Spalt 76 entweichen. Da der Spalt 78 sich im Bereich der Griffe des Topfes 2 befindet, ist sichergestellt, daß beim Ausgießen des Simmertopfes kein Wasser aus dem Hohlraum 77 zwischen Topf 2 und Simmereinsatz 64 mitausgegossen wird. Das Entfernen des Simmereinsatzes 64 erfolgt in umgekehrter Weise.

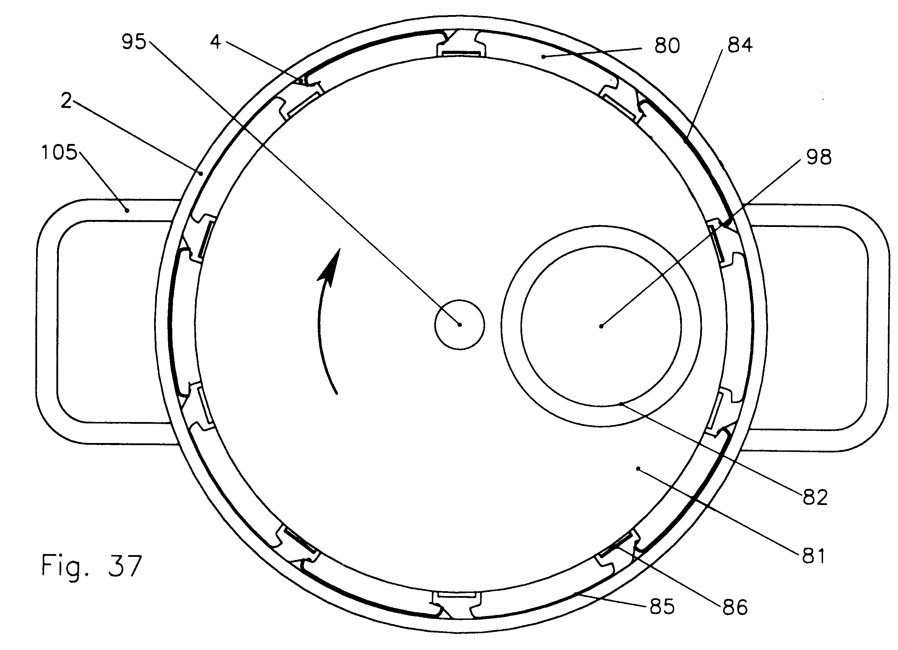

In der Figur 37 ist ein im Topf 2 eingesetzter Schneideinsatz in Draufsicht dargestellt. Dieser besitzt eine Schneidscheibe 80, die in einem Innenbereich mit Schneiden 88 versehen ist. Zusätzlich können noch Schneiden 89 als grobe Hobel vorgesehen sein. Auf der Schneidscheibe 80 befindet sich ein Drehteller 81 mit einem Drehgriff 82 und dem Stopfer 83. Die Schneidscheibe 80 hat in doppelter Anzahl wie die Topfsegmente 4 auf ihrem Umfang gleichmäßig verteilte, abwechselnd nach oben 84 und nach unten 85 weisende Laschen, die so dimensioniert sind, daß sie in die Segmentlücken 14 des Topfes 2 passen. Zwischen den Laschen 84, 85 befinden sich ebenfalls abwechselnd nach oben und nach unten abgekantete Stege 86. Im Mittelpunkt der Schneidscheibe 80 befindet sich ein Loch 94 und im Mittelpunkt des Drehtellers 81 ist ein Napf 95 nach unten gezogen ausgebildet, wobei sein äußerer Durchmesser so dimensioniert ist, daß er mit geringem Spiel in das Loch 94 paßt. Der Rand des Drehtellers 81 ist umlaufend mit einer Umbördelung 96 versehen. Der äußere Durchmesser der Umbördelung 96 ist so dimensioniert, daß er mit geringem Spiel gegen die innere Seite der jeweiligen Stege 86 anliegt. Etwa mittig in radialer Richtung zwischem dem Napf 95 und der Bördelung 96 befindet sich der Schacht 97. Mit geringem Spiel ist der Drehgriff 82 auf dem Schacht 97 drehbar gelagert. Der Stopfer 83 gleitet mit geringem Spiel im Schacht 97 und im oberen Teil des Drehgriffs 82 und ist oben mit einem aufgeschnappten Deckel 98 verschlossen.

Die für den jeweiligen Anwendungszweck vorgesehene Schneidscheibe 80 wird so in den Topf 2 gelegt, daß der Bereich der nach oben weisenden Lasche 84 auf den Topfsegmenten 4 aufliegt, während die nach unten weisenden Laschen in die Segmentlücken 14 des Topfes 2 zu liegen kommen. Dann wird der Drehteller 81 so auf der Schneidscheibe 80 gelegt, daß der Napf 95 auf das Loch 94 zu liegen kommt, wobei die untere Seite der Umbördelung 96 auf der Schneidscheibe 80 aufliegt. Dann wird der Drehgriff 82 auf den Schacht 97 gesteckt. Das zu bearbeitetende Gut wird zuerst, wenn erforderlich, in passende Streifen geschnitten und in Längsrichtung in den Schacht 97 gesteckt. Dann wird der Stopfer 83 ebenfalls in den Schacht 97 gesteckt und nach unten gedrückt. Eine Hand umfaßt den Stopfer 83 und den Drehgriff 82 und dreht im Ausführungsbeispiel recht herum bei gleichzeitigem Niederdrücken des Drehtellers 81. Dabei wird das zu schneidende Gut kreisförmig über die Schneidfläche 87 geführt. Das Schneidgut wird je nach eingesetzter Schneidscheibe geraspelt, gehobelt oder gerieben und fällt unmittelbar in den Topf 2.

### Bezugszeichenliste

- 1: Dampfdruck-Kochtopf
- 2: Topf
- 3: Dampfdruckdeckel
- 4: Topfsegment
- 5: Band
- 6: Ausprägung
- 7: Haube
- 8: Dichtungselement
- 9: Feder
- 10: Druckentlastungs- und Entlüftungsventil
- 11: Druckanzeige - und Abdampfeinrichtung
- 12: Deckelsegment
- 13: Endabschnitt der Deckelsicke
- 14: Segmentlücke
- 15: Lücken
- 16: Schlitz
- 17: Ausbuchtung
- 19: Widerhaken
- 20: Dichtlippe
- 21: Dichtkante
- 22: Zylinderfläche
- 23: Ventilsitz
- 24: Einprägung
- 25: Scheibe
- 26: Druckfeder
- 27: Ventilkörper
- 28: Hülse
- 29: Lochscheibe
- 30: Federteller
- 31: Drehfeder
- 32: Ventilkugel
- 33: Hülse
- 34: Lochscheibe
- 35: Ringsicke
- 36: Federteller
- 37: Kolben
- 38: Druckfeder
- 39: Buchse
- 40, 41: Farbringe
- 42: Kappe
- 43: Rollmembran
- 44: Wulst
- 45: Einprägung
- 46: Dichtlinie
- 47: Linie
- 48: Schüttrand
- 49: Fläche
- 50: Ausbuchtung
- 51: untere Fläche
- 52: Ventilöffnung
- 53: Nut
- 55: Deckel
- 56: Zylinderfläche
- 57: Dämpfeinsatz
- 58: Zylinderfläche
- 59: Aufweitung
- 60: Kante
- 61: Rand
- 62: Übergangsabschnitt
- 63: Simmertopf
- 64: Simmereinsatz
- 66: Ring
- 67: Aufweitung
- 68: Abkantung
- 69: Sicherungslappen
- 70,71: Lappen
- 72: Zunge
- 73: Ausprägung
- 74: Schüttrand
- 75: Ausprägung
- 76: ringförmiger Spalt
- 77: Hohlraum
- 78: Spalt
- 80: Schneidscheibe
- 81: Drehteller
- 82: Drehgriff
- 83: Stopfer
- 84,85: Lasche
- 86: Steg
- 88,89: Schneide
- 94: Loch
- 95: Napf
- 96: Umbördelung
- 97: Zuführschacht
- 98: Deckel
- 100: Umfangswand des Topfes
- 102: Vertiefung
- 104: Topfsicke
- 105: Topfgriff
- 110: Deckelwand
- 111: Deckegriff
- 112: Deckelsicke
- 113: Mittelabschnitt der Deckelsicke
- 114: horizontaler Übergangsabschnitt
- 117: mäanderförmiger gebogener Abschnitt
- 118: Wellental
- 120: Öffnung der Haube
- 121: Öffnung der Haube
- 123: stirnseitige Außenfläche
- 125: Ringspalt
- 127: Dichtkante
- 128: gummielastischer Einsatz
- 129: oberer zylindrischer Abschnitt
- 130: unterer zylindrischer Abschnitt
- 134: zylindrischer Abschnitt
- 135: Distanzelement
- 136: Ringspalt
- 137: Kolbenende
- 138: Kolbenende
- 145: Rand
- 150: Umfangswand des Dämpfeinsatzes
- 151: Bodenwand
- 152: oberer Wandabschnitt
- 153: unterer zylindrischer Wandabschnitt
- 155: Haube
- 156: Umfangswand
- 157: oberer Wandabschnitt
- 158: Übergangsabschnitt
- 159: unterer Wandabschnitt
- 160: Umfangswand des Simmereinsatzes
- 161: horizontaler Wandabschnitt

## Patentansprüche

1. Topf, insbesondere Dampfdruckkochtopf, mit einem Boden und einer Umfangswand, an der Griffe sowie sich unterhalb des oberen Randes der Umfangswand in Umfangsrichtung erstreckende, segmentförmige Vorsprünge als Bestandteil einer Schließeinrichtung angeordnet sind, dadurch gekennzeichnet,
daß die segmentförmigen Vorsprünge (Topfsegmente) (4) in das Topfinnere weisend ausgebildet sind.

2. Topf nach Anspruch 1, dadurch gekennzeichnet, daß die Topfsegmente (4) als in die Umfangswand (100) von außen nach innen geprägte Sicken (Topfsicken) (104) ausgebildet sind.

3. Topf nach Anspruch 1 oder 2, dadurch gekennzeichnet, daß mindestens zwei Topfsegmente (4) über den Umfang gleichmäßig verteilt angeordnet sind.

4. Topf nach einem der Ansprüche 2 oder 3, dadurch gekennzeichnet, daß die Wanddicke der Topfsicken (104) etwa gleich der Wanddicke der Umfangswand (100) ist.

5. Topf nach einem der Ansprüche 2 bis 4, dadurch gekennzeichnet, daß die durch die Ausbildung der Topfsicken (104) entstandenen, von außen sichtbaren Vertiefungen (102) mittels eines Bandes (5) abgedeckt sind.

6. Topf nach einen der Ansprüche 1 bis 5, dadurch gekennzeichnet, daß in der Umfangwand (100) mindestens eine sich vertikal erstreckende nach außen weisende Ausprägung (6) vorgesehen ist.

7. Topf nach Anspruch 6, dadurch gekennzeichnet, daß die Ausprägung (6) sich im Bereich eines der Griffe in einer Segmentlücke (14) zwischen und oberhalb der Topfsegmente (4) befindet.

8. Dampfdruckdeckel für einen Topf gemäß Anspruch 1, mit einer Haube, die mindestens ein Druckbegrenzungs- und Entlüftungsventil sowie eine Druckanzeige- und Dampfablaßeinrichtung aufweist, und die im Randbereich in eine zylindrische Deckelwand übergeht, die sich in Umfangsrichtung erstreckende segmentförmige Vorsprünge als Bestandteil einer Schließeinrichtung trägt, sowie mit mindestens einem Dichtelement dadurch gekennzeichnet,
daß die segmentförmigen Vorsprünge (Deckelsegmente) (12) nach außen weisend ausgebildet sind.

9. Dampfdruckdeckel nach Anspruch 8, dadurch gekennzeichnet, daß die Deckelsegmente (12) als in die Umtangswand (110) von innen nach außen geprägte Sicken (Deckelsicken) (112) ausgebildet sind.

10. Dampfdruckdeckel nach Anspruch 9, dadurch gekennzeichnet, daß die Anzahl und Umfangsverteilung der Deckelsegmente (12) der Anzahl und Umfangsverteilung der Topfsegmente (4) entspricht, wobei die Deckelsegmente (12) kürzer sind als die zwischen den Topfsegmenten (4) befindlichen Segmentlücken (14).

11. Dampfdruckdeckel nach einem der Ansprüche 9 oder 10, dadurch gekennzeichnet, daß die Deckelsicken (112) gekrümmte, nach oben zur Haube (7) weisende Endabschnitte (13) aufweisen.

12. Dampfdruckdeckel nach einem der Ansprüche 9 bis 11, dadurch gekennzeichnet, daß die Länge des zwischen den Endabschnitten (13) befindlichen Mittelabschnitts (113) der Deckelsicken (112) der Länge der Topfsicken (104) entspricht.

13. Dampfdruckdeckel nach einem der Ansprüche 9 bis 12, dadurch gekennzeichnet, daß die Umfangswand (110) des Deckels (3) an ihrer Außenseite zwischen Haube (7) und Deckelsicken (112) mindestens eine Feder (9) trägt, die sich beim Aufsetzen und Verschließen des Topfes (2) zunehmend spannt.

14. Dampfdruckdeckel nach Anspruch 13, dadurch gekennzeichnet, daß die Feder (9) sich längs des Umfangs der Umfangswand (110) wellenförmig erstreckt, wobei jeweils ein Wellental (118) im Bereich einer Deckelsicke (112) liegt.

15. Dampfdruckdeckel nach Anspruch 14, dadurch gekennzeichnet, daß die Feder (9) in der Deckelebene mäanderförmig gebogene Abschnitte (117) aufweist.

16. Dampfdruckdeckel nach einem der Ansprüche 8 bis 15, dadurch gekennzeichnet, daß das Dichtelement (8) ein zwischen Haube (7) und Feder (9) an der Deckelwand (110) anliegender Dichtungsring ist, der an seiner Außenseite eine umlaufende Dichtkante (21) aufweist.

17. Dampfdruckdeckel nach einem der Ansprüche 8 bis 16, dadurch gekennzeichnet, daß die Druckanzeige- und Abdampfeinrichtung (11) eine, in einer Öffnung (121) der Haube (7) begrenzt verschieblich angeordnete, sich in das Deckelinnere erstreckende Hülse (33) aufweist, in der ein Kolben (37) gegen die Kraft einer Druckfeder (38) beweglich gelagert ist, wobei der Kolben (37) an seinem ins Deckelinnere weisenden Ende (137) an einer die Hülse (37) umschließenden Rollmembrane (43) anliegt und an seinem nach außen weisenden Ende (138) Farbringe (40, 41) trägt.

18. Dampfdruckdeckel nach Anspruch 17, dadurch gekennzeichnet, daß die Hülse (33) im Bereich der Öffnung (121) der Haube (7) eine nach innen weisende Ringsicke (35) aufweist, in die von außen die Rollmembrane (43) eingreift und an der an der Innenseite sich von unten ein Federteller (36) und von oben eine auf dem Kolben (37) befestigte Buchse (39) abstützt.

19. Dämpfeinsatz für einen Topf gemaß Anspruch 1, mit einem mit Öffnungen versehenen Boden und einer Umfangswand, die einen nach außen umgebogenen Rand zur Auflage auf dem Rand des Topfes aufweist, dadurch gekennzeichnet,
daß die Umfangswand (150) einen sich an den Boden (151) anschließenden unteren zylindrischen Wandabschnitt (153) und einen sich an den Rand (61) anschließenden oberen zylindrischen Wandabschnitt (152) aufweist, wobei der obere Wandabschnitt (152) einen größeren Durchmesser aufweist als der untere Wandabschnitt (153) und beide Wandabschnitte (152, 153) über einen flanschartigen Übergang (62) miteinander verbunden sind, der an die Kontur der Topfsegmente (4) angepaßt ist.

20. Dämpfeinsatz nach Anspruch 19, dadurch gekennzeichnet, daß die Außendurchmesser der Wandabschnitte (152, 153) und des flanschartigen Übergangs (62) kleiner als die Innenabmessungen des Topfes sind, so daß der Dämpfeinsatz (57) die Umfangswand (100) des Topfes (2) und seine Topfsegmente (4) nicht berührt.

21. Deckel für einen Topf gemäß Anspruch 1 und/oder für einen Dämpfeinsatz gemäß Anspruch 19 mit einer Haube und einer zylindrischen Umfangswand, dadurch gekennzeichnet,
daß die zylindrische Umfangswand (156) einen an die Haube (155) angrenzenden oberen Wandabschnitt (157) aufweist, der über einen Übergangsabschnitt (158) in einen unteren Wandabschnitt (159) übergeht, wobei der Durchmesser des unteren Wandabschnitts (159) kleiner ist als der des oberen Wandabschnittes (157).

22. Deckel nach Anspruch 21, dadurch gekennzeichnet, daß die Außendurchmesser der beiden Wandabschnitte (157, 159) des Deckels (55) kleiner sind als der Innendurchmesser der Umfangswand (109) des Topfes (2) , so daß der untere Wandabschnitt (159) des Deckels (55) auf die Topfsegmente (4) aufsetzbar ist.

23. Deckel nach Anspruch 21 oder 22, dadurch gekennzeichnet, daß der Außendurchmesser des oberen Wandabschnittes (157) des Deckels (55) größer und der Außendurchmesser des unteren Wandabschnittes (159) des Deckels (55) kleiner ist als der Innendurchmesser des oberen Wandabschnittes (152) des Dämpfeinsatzes (37), so daß der Deckel (55) lediglich mit seinem Übergangsabschnitt (158) den Dämpfeinsatz (37) berührt.

24. Simmereinsatz für einen Topf gemäß Anspruch 1 mit einem Boden und mit einer zylindrischen Umfangswand mit einem Rand, dadurch gekennzeichnet,
daß an der Außenseite der Umfangswand (160) Halte- und Schließelementen angeordnet ist, die mit den Topfsegmenten (4) zusammenwirken.

25. Simmereinsatz nach Anspruch 22, dadurch gekennzeichnet, daß die Halte- und Schließelemente mindestens einen nach außen vorstehenden Lappen (70) umfassen, der eine sich in Umfangsrichtung erstreckende federnde Zunge (72) zum Untergreifen der Topfsegmente (4) aufweist.

26. Simmereinsatz nach Anspruch 25, dadurch gekennzeichnet, daß die Zunge (72) an ihrem freien Ende eine nach oben weisende Ausprägung (73) aufweist.

27. Simmereinsatz nach einem der Ansprüche 24 bis 26, dadurch gekennzeichnet, daß beabstandet zu jeder Zunge (72) ein nach außen vorstehender Sicherungslappen (69) an der Umfangswand angebracht ist.

28. Simmereinsatz nach einem der Ansprüche 24 bis 27, dadurch gekennzeichnet, daß die Halte- und Schließelemente mindestens einen nach außen vorstehenden Lappen (71) umfassen, der derart nach oben versetzt und beabstandet zum Lappen (70) angeordnet ist, daß er in Schließstellung an dem zugeordneten Topfsegment (4) anstößt.

29. Simmereinsatz nach einem der Ansprüche 24 bis 28, dadurch gekennzeichnet, daß die Lappen (69, 70, 71) als Bestandteile eines an der Außenseite der Umfangswand (160) angeordneten Rings (66) ausgebildet sind.

30. Simmereinsatz nach Anspruch 29, dadurch gekennzeichnet, daß oberhalb des Rings (66) ein Dichtungsring angeordnet ist, der an seiner Außenseite eine umlaufende Dichtkante (21) aufweist.

31. Simmereinsatz nach Anspruch 30, dadurch gekennzeichnet, daß das Dichtungselement (8) derart angeordnet ist, daß die Dichtkante (21) im Bereich der Ausprägung (6) des Topfes (2) liegt, wenn der Simmereinsatz (64) in den Topf (2) eingesetzt ist.

32. Schneideinsatz für einen Topf gemäß Anspruch 1 mit einem in Form einer runden in den Topf einsetzbaren Schneidscheibe, die in einem Flächenbereich Schneidelemente, insbesondere zum Schneiden, Hobeln oder Raspeln aufweist, dadurch gekennzeichnet,
daß am Außenumtang der Schneidscheibe (80) abwechselnd nach oben und unten abstehende Laschen (84, 85) derart angeordnet sind, daß sich die nach oben weisenden Laschen (84, 85) auf den Topfsegmenten (4) und die nach unten weisenden Laschen (58) zwischen den Topfsegmenten (4) befinden und
daß die Schneidscheibe (80) Mittel zur drehbaren Lagerung eines Drehtellers (81) aufweist.

33. Schneideinsatz nach Anspruch 32, dadurch gekennzeichnet, daß der Drehteller (81) einen exzentrisch angeordneten, als Zuführschacht (97) für das zu schneidende Gut ausgebildeten Drehgriff (82) aufweist.

34. Schneideinsatz nach Anspruch 33, dadurch gekennzeichnet, daß der Drehgriff (82) eine den Zuführschacht (97) umgebende und auf diesem drehbar gelagerte Hülse (99) aufweist, in der ein Stopfer (83) gleitend gelagert ist.
